# EUROPÄISCHE PATENTSCHRIFT

(11) **EP 3 871 499 B1**
(45) Veröffentlichungstag und Bekanntmachung des Hinweises auf die Patenterteilung: **23.07.2025**
(21) Anmeldenummer: 21153178.5
(22) Anmeldetag: 25.01.2021
(51) Int. Cl.: A01M 7/00, B05B 7/32, B01F 23/45, B01F 33/502, B01F 33/84, B05B 12/04, B05B 12/08, B05B 9/04

(54) **SPRITZEINRICHTUNG ZUM AUSBRINGEN VON SPRITZFLÜSSIGKEIT, LANDWIRTSCHAFTLICHE FELDSPRITZE UND VERFAHREN ZUM BETREIBEN EINER SPRITZEINRICHTUNG**
SPRAYING DEVICE FOR DISCHARGING SPRAY LIQUID, AGRICULTURAL FIELD SPRAYER AND METHOD FOR OPERATING A SPRAYING DEVICE
DISPOSITIF PULVÉRISATEUR PERMETTANT DE DISTRIBUER UN LIQUIDE DE PULVÉRISATION, PULVÉRISATEUR AGRICOLE ET PROCÉDÉ DE FONCTIONNEMENT D'UN DISPOSITIF PULVÉRISATEUR

(30) Priorität: 26.02.2020 DE 102020105034
(43) Veröffentlichungstag der Anmeldung: 01.09.2021
(73) Patentinhaber: HORSCH LEEB Application Systems GmbH, 94405 Landau an der Isar (DE)
(72) Erfinder: Leeb, Theodor, 94405 Landau an der Isar (DE)
(74) Vertreter: v. Bezold & Partner Patentanwälte - PartG mbB

(56) Entgegenhaltungen:
- EP-A1- 3 539 375
- DE-A1- 102017 220 028
- DE-A1- 102018 208 156

## Beschreibung

Die Erfindung betrifft eine Spritzeinrichtung zum Ausbringen von Spritzflüssigkeit, insbesondere auf landwirtschaftlichen Nutzflächen. Die Erfindung betrifft zudem eine landwirtschaftliche Feldspritze sowie ein Verfahren zum Betreiben einer Spritzeinrichtung.

Spritzeinrichtungen werden als sog. Feldspritze bzw. Pflanzenschutzspritze zum Ausbringen bzw. zur Applikation von Spritzflüssigkeiten, insbesondere von flüssigen Trägerflüssigkeiten (z.B. Wasser) und/oder von in Trägerflüssigkeiten gelösten und/oder vermischten Wirkstoffkonzentraten wie Düngemittel, Pflanzenschutzmittel oder dergl. verwendet. Derartige Feldspritzen mit einer quer zur Fahrtrichtung orientierten und über einem Pflanzenbestand bewegten Spritzbalkenanordnung bzw. Spritzgestänge sind in unterschiedlichsten Ausführungsvarianten bereits bekannt, bspw. als selbstfahrende oder als mittels eines Zugfahrzeugs gezogene oder als an einem Zugfahrzeug angebaute Feldspritze.

Das Dokument DE 10 2017 220 028 A1 offenbart eine Spritzeinrichtung zum Ausbringen von Flüssigkeiten, insbesondere für landwirtschaftliche Zwecke, mit zumindest einer Spritzdüse zum Ausspritzen der Flüssigkeit und mit zumindest einer Mischeinrichtung, die zumindest eine Mischkammer aufweist, wobei in die Mischkammer zumindest ein erster Zulauf für eine Trägerflüssigkeit, zumindest zweite Zuläufe für unterschiedliche Wirkstoffflüssigkeiten und zumindest einen mit der Spritzdüse verbundenen Ablauf münden. Ferner ist offenbart, dass jedem der Zuläufe ein betätigbares Ventil zugeordnet ist, und mit einer Einrichtung, welche die Ventile bei bestimmungsgemäßem Gebrauch derart betätigt, dass sich in den Ablauf unabhängig von der Betätigung der Ventile/Beschaltung der Zuläufe ein konstanter Volumenstrom ergibt.

Das Dokument EP 3 539 375 A1 offenbart ein Verteilsystem für eine landwirtschaftliche Feldspritze mit zumindest einem Vorratsbehälter zur Bereitstellung der jeweiligen Spritzflüssigkeit, wobei die Spritzflüssigkeit mittels einer Pumpe mit variabel veränderbaren Druck vom Vorratsbehälter entlang einer Flüssigkeitsleitung gefördert wird, wodurch jeweils Spritzdüsen mit Spritzflüssigkeit versorgt werden.

Das Dokument DE 10 2018 208 156 A1 offenbart eine Spritzdüseneinheit zum Ausbringen einer Spritzflüssigkeit, insbesondere für landwirtschaftlichen Zwecke, mit zumindest einer Spritzdüse mit jeweils einem vorgeschalteten pulsmodulierten, insbesondere pulsweitenmodulierten Ventil, mittels dem eine Ausbringmenge der Spritzflüssigkeit aus der Spritzdüse steuerbar ist; zumindest zwei Zulaufleitungen, mittels derer zumindest eine Flüssigkeit zu der zumindest einen Spritzdüse leitbar ist; und jeweils einer jeder der Zulaufleitungen zugeordneten Druckregeleinheit, mittels derer ein Förderdruck der jeweiligen Flüssigkeit an der zumindest einen Spritzdüse auf einen geregelten Druck regelbar ist, um ein Tropfenspektrum der ausgebrachten Spritzflüssigkeit zu steuern.

Eine Feldspritze mit einer Spritzeinrichtung wurde bspw. durch die EP 0 463 007 B1 bekannt. Die Spritzeinrichtung umfasst ein Spritzgestänge mit einer Vielzahl von Spitzdüsen, sowie einen Vorratsbehälter für jedes Spritzmittelkonzentrat sowie für eine Verdünnungsflüssigkeit, insbesondere Wasser. Zudem umfasst die Spritzeinrichtung Pumpen, insbesondere Hubkolbenpumpen, zum dosierten Einspritzen von Spritzmittelkonzentrat in eine über eine Druckwasserpumpe mit Verdünnungsflüssigkeit versorgte Mischkammer. Es ist zudem vorgesehen, dass während des Betriebs über eine Rechen- und Steuereinheit unter Berücksichtigung der je Flächeneinheit auszubringenden Menge des Spritzmittelkonzentrat die Steuerung der Pumpen in Abhängigkeit von Fahrgeschwindigkeitsänderungen der Feldspritze so erfolgt, dass die durch die Spritzdüsen applizierte Ausbringung des Spritzmittelkonzentrats pro Flächeneinheit möglichst konstant bleibt.

Mit derartigen Pumpen ist jedoch eine exakte Dosierung von Spritzmittelkonzentraten nicht möglich, da diese jeweils je Umdrehung bzw. je Pumpenhub ein durch die Pumpenbauform fest definiertes Volumen dosieren bzw. fördern. Somit können insbesondere geringe Mengen an Spritzmittelkonzentrat mittels derartiger Pumpen nicht exakt genug gefördert oder dosiert werden, da die durch einen Pumpenhub geförderte Menge mitunter zu groß sein kann. Darüber hinaus unterliegen derartige Pumpen einem großen Verschleiß und benötigen zur Variation der Drehzahl entsprechend kostenintensive Antriebsmotoren und Steuerungseinrichtungen.

Aufgabe der Erfindung ist es somit, eine Spritzeinrichtung zum Ausbringen von Spritzflüssigkeit, insbesondere auf landwirtschaftlichen Nutzflächen zur Verfügung zu stellen, bei welcher mit einfachen Mitteln eine exakte Dosierung von Flüssigkeit möglich ist.

Diese Aufgabe wird gelöst durch eine Spritzeinrichtung mit den Merkmalen des unabhängigen Anspruch 1, durch eine Landwirtschaftliche Feldspritze mit den Merkmalen des Anspruch 14, sowie durch ein Verfahren zum Betreiben einer Spritzeinrichtung mit den Merkmalen des Verfahrensanspruch 16. Vorteilhafte Ausführungsformen und Weiterbildungen der Erfindung sind in den abhängigen Ansprüchen und der folgenden Beschreibung unter teilweiser Bezugnahme auf die Figuren offenbart.

Die Erfindung betrifft eine Spritzeinrichtung zum Ausbringen von Spritzflüssigkeit, insbesondere auf landwirtschaftlichen Nutzflächen (z.B. Ackerfläche). Die Spritzeinrichtung umfasst wenigstens einen Vorratstank für wenigstens eine Spritzflüssigkeit, sowie wenigstens ein Aufnahmeelement zur Aufnahme und Weiterleitung der Spritzflüssigkeit.

Die Spritzeinrichtung umfasst zudem ein Druckerzeugungsglied, zur Erzeugung eines Förderdruck zur Förderung der Spritzflüssigkeit vom Vorratstank zum Aufnahmeelement, sowie eine oder mehrere zwischen dem Vorratstank und dem Aufnahmeelement angeordnete Ventileinheiten.

Darüber hinaus umfasst die Spritzeinrichtung eine Spritzbalkenanordnung mit Spritzdüsen zum Verteilen der Spritzflüssigkeit, insbesondere auf landwirtschaftlichen Nutzflächen.

Um eine Spritzeinrichtung zum Ausbringen von Spritzflüssigkeit zur Verfügung zu stellen, bei welcher mit einfachen Mittel eine exakte Dosierung von Spritzflüssigkeit möglich ist, ist erfindungsgemäß vorgesehen, dass die Öffnungs- und Schließzeiten der einen und/oder der mehreren Ventileinheiten mittels Pulsweitenmodulation in Abhängigkeit einer definierten Flüssigkeitsmenge mittels einer Steuereinrichtung automatisiert gesteuert und/oder geregelt werden.

Erfindungsgemäß ist somit insbesondere vorgesehen, dass mittels Pulsweitenmodulation die eine und/oder mehreren Ventileinheiten intervallweise zwischen einer geöffneten und einer geschlossenen Stellung geschalten werden, wobei insbesondere vorgesehen sein kann, dass in Abhängigkeit einer definierten Flüssigkeitsmenge (z.B. Liter pro Minute) die Zeiten, d.h. die Dauer der geöffneten Stellung (gemäß vorliegender Erfindung Öffnungszeit - Spritzflüssigkeit kann durch Ventileinheit strömen) und der geschlossenen Stellung (gemäß vorliegender Erfindung Schließzeit) mittels einer Steuereinrichtung gesteuert und/oder geregelt werden.

Gemäß einer bevorzugten Ausführungsvariante kann insbesondere vorgesehen sein, dass die Öffnungs- und Schließzeiten der einen und/oder der mehreren Ventileinheiten mittels Pulsweitenmodulation in Abhängigkeit einer definierten Flüssigkeitsmenge mittels einer Steuereinrichtung automatisiert gesteuert und/oder geregelt werden können, wobei mittels der Steuereinrichtung intervallweise und kontinuierlich in Abhängigkeit der Öffnungs- und Schließzeiten zwischen einer geöffneten Stellung und einer geschlossenen Stellung der einen und/oder der mehreren Ventileinheiten gewechselt wird.

Infolge der Erfindungsgemäßen Maßnahmen erfolgt die exakte Dosierung somit nicht mehr wie aus dem Stand der Technik bekannt durch Pumpen sondern durch Ventileinheiten deren Öffnungs- und Schließzeiten mittels sog. Pulsweitenmodulation (PWM) derartig gesteuert und/oder geregelt werden können um eine exakte Flüssigkeitsmenge (z.B. Spritzflüssigkeitsmenge) zu erhalten, insbesondere um eine wesentlich exaktere Flüssigkeitsmenge gegenüber bspw. Kolbenpumpen und Kreiselpumpen zu erhalten. Wobei somit insbesondere auch geringste Flüssigkeitsmengen exakt dosiert werden können.

Die erfindungsgemäße Spritzeinrichtung ist vorzugsweise Bestandteil einer landwirtschaftlichen Feldspritze. Wobei die Feldspritze sowohl als eine selbstfahrende, als auch als eine mittels eines Zugfahrzeug (z.B. Traktor) gezogene oder als eine an einem Zugfahrzeug angebaute (z.B. mittels Dreipunkt-Anhängung) Feldspritze ausgeführt sein kann. Gemäß einer bevorzugten ausführungsvariante kann die Feldspritze ein Chassis mit einer Rahmenkonstruktion sowie eine Spritzeinrichtung, wie in diesem Dokument beschrieben, aufweisen. Zudem kann dem Chassis ein Fahrwerk zugeordnet sein. Des Weiteren kann zweckmäßig insbesondere vorgesehen sein, dass der Vorratstank, dass Aufnahmeelement, die Pumpe und die Spritzbalkenanordnung am Chassis angebaut und/oder gelagert sind.

Die Spritzbalkenanordnung umfasst oder ist insbesondere ein Spritzgestänge mit einer Mehrzahl von beabstandet zueinander (z.B. 25cm und/oder 50cm) angeordneten Spritzdüsen zum Verteilen der Spritzflüssigkeit. Wobei ein Verteilen, insbesondere ein Zerstäuben, Versprühen und/oder dergl. umfassen kann.

Die Spritzbalkenanordnung kann sich in einer Arbeitsstellung in einer großen Arbeitsbreite (z. B. bis zu 24 Meter oder 30 Meter oder mehr) quer zu einer Fahrtrichtung der Feldspritze erstrecken. Die Spritzdüsen können zudem alle oder gruppenweise in regelmäßigen Abständen an der Spritzbalkenanordnung angeordnet sein. Die Spritzdüsen können zudem mittels wenigstens einer Flüssigkeitsleitung (z.B. Spritzleitung, Verbindungsleitung, Hauptleitung und/oder dergl.) mit dem Aufnahmeelement verbunden sein. Wobei auch die Flüssigkeitsleitung bzw. das Leitungssystem als Aufnahmeelement dienen kann. Die Flüssigkeitsleitung kann zudem mit dem Aufnahmeelement und/oder mit dem Vorratstank eine Ringleitung ausbilden.

Gemäß einer Weiterbildung der Erfindung kann die Spritzbalkenanordnung und/oder können die Spritzdüsen in Teilbreiten unterteilt oder aufgeteilt sein, wobei die Teilbreiten bspw. Arbeitsbreiten von maximal 1 Meter oder 3 Meter oder 5 Meter oder 6 Meter aufweisen können. Zudem kann vorgesehen sein, dass jede Teilbreite mit einer, vorzugsweisen separaten Flüssigkeitsleitung mit dem Aufnahmeelement verbunden wird.

Gemäß einer Weiterbildung der Erfindung kann zudem vorgesehen sein, dass das Aufnahmeelement in einer Verteileinheit integriert ist (z.B. in Form einer Mischkammer) und/oder dass eine Verteileinheit dem Aufnahmeelement nachgeordnet (d.h. in Bezug auf den Flüssigkeitsfluss) ist.

Die Verteileinheit dient insbesondere zur Aufteilung der Spritzflüssigkeit zu einer Mehrzahl an Flüssigkeitsleitungen, insbesondere entsprechend der Anzahl an Teilbreiten.

Der Vorratstank kann eine Einfüllöffnung, zum Befüllen des Vorratstank und einen Auslass zur Ausgabe von Spritzflüssigkeit in Richtung der einen oder der mehreren Verteileinheiten umfassen.

Die Spritzeinrichtung umfasst insbesondere ein Druckerzeugungsglied, wobei das Druckerzeugungsglied bspw. ein den Vorratstank mit Druck (z.B. Überdruck) beaufschlagendes Element (z.B. Kompressor oder dergl.) sein kann. Alternativ oder ergänzend kann das Druckerzeugungsglied eine Spritzflüssigkeit vom Vorratstank zum Aufnahmeelement mit einem Förderdruck fördernde Pumpe sein.

Das Druckerzeugungsglied ist insbesondere derartig ausgebildet und der Spritzeinrichtung derartig zugeordnet, dass sich ein Druckgefälle vom Vorratstank stromabwärts einstellt. D.h., dass Druckerzeugungsglied ist zweckmäßig insbesondere derartig ausgebildet und der Spritzeinrichtung derartig zugeordnet, dass ein Förderdruck (d.h. der Spritzflüssigkeit) vor der einen Ventileinheit und/oder vor den mehreren Ventileinheiten größer oder gleich ist als ein Förderdruck nach der einen Ventileinheit und/oder nach den mehreren Ventileinheiten und/oder im Aufnahmeelement.

Um die Dosierung der Flüssigkeitsmenge noch weiter zu verbessern, kann vorgesehen sein, dass die Spritzflüssigkeit kontinuierlich mit einem weitgehend konstanten Förderdruck vom Vorratstank zum Aufnahmeelement gefördert wird, wobei der konstante Förderdruck hierfür bspw. mittels einer Pumpe erzeugt werden kann und/oder mittels einem bspw. den Vorratstank mit Überdruck beaufschlagenden Kompressor erzeugt werden kann.

Die Pumpe kann vorzugsweise eine Kolbenpumpe oder Kreiselpumpe sein, welche ausgebildet ist, die Spritzflüssigkeit mit einem weitgehend konstanten Förderdruck vom Vorratsbehälter zum Aufnahmeelement zu fördern. Die Pumpe und/oder der Kompressor kann zur Variation des Förderdruck einen motorischen Antrieb (z.B. Hydraulikmotor, Elektromotor, oder dergl.) umfassen, welcher vorzugsweise ausgebildet ist, die Pumpe und/oder den Kompressor mit verschiedenen Drehzahlen zu betreiben. Der motorische Antrieb kann zudem Bestandteil und/oder Signalverbunden mit einer Steuerungseinrichtung sein.

Das Druckerzeugungsglied ist insbesondere derartig ausgeführt und/oder mittels einer Steuereinrichtung derartig betreibbar, dass anhand einer Drehzahl des Druckerzeugungsglied unterschiedliche Förderdrücke definiert werden können, wobei die Förderdrücke bspw. in einem Bereich zwischen 0,5 bar und 8 bar liegen können. Wobei wiederum mittels dieses Förderdrucks die Spritzflüssigkeit auch in Richtung der am Spritzbalken angebrachten Spritzdüsen gefördert werden kann, insbesondere vom Aufnahmeelement in Richtung der am Spritzbalken angebrachten Spritzdüsen gefördert werden kann.

Zur Veränderung einer gewünschten Flüssigkeitsmenge kann gemäß einer weiteren Ausführungsvariante vorgesehenen sein, dass die Öffnungs- und Schließzeiten der einen oder der mehreren Ventileinheiten mittels Pulsweitenmodulation in Abhängigkeit eines Förderdruck (d.h. Förderdruck der Spritzflüssigkeit) mittels der Steuereinrichtung automatisiert gesteuert und/oder geregelt wird.

Insbesondere kann zweckmäßig vorgesehen sein, dass die Öffnungs- und Schließzeiten der einen oder der mehreren Ventileinheiten mittels Pulsweitenmodulation in Abhängigkeit einer definierten Flüssigkeitsmenge und eines Förderdruck mittels einer Steuereinrichtung automatisiert gesteuert und/oder geregelt werden.

Es sei darauf hingewiesen, dass es sich unter einer Pulsweitenmodulation bzw. einer mit einer veränderbaren Pulsweitenmodulation ansteuerbaren Ventileinheit insbesondere um derartige Ventileinheiten handelt, welche mittels einer Pulsweitenmodulation (PWM) oder einer Pulsdauermodulation oder einer Pulslängenmodulation, oder einem Unterschwingungsverfahren oder einer Pulsbreitenmodulation ansteuerbar sind. Wobei all diese Ansteuerungsarten im Nachfolgenden unter dem Begriff der Pulsweitenmodulation oder PWM zusammengefasst werden.

Insbesondere kann es sich bei der einen oder den mehreren Ventileinheiten um ein Ventil wie bspw. ein Elektromagnetventil handeln. Auch kann die Ventileinheit ein motorisch angetriebenes Element sein, bspw. ein Schrittmotor oder dergl. motorisches Element. Auch wären diverse Aktoren als Ventileinheit wie bspw. Zylinder denkbar. Die Ventileinheit ist jeweils derartig ausgeführt, dass mittels diesem die jeweilige Flüssigkeitsförderung bzw. der Volumenstrom in der Spritzeinrichtung in definierten bzw. definierbaren Pulsweiten erfolgen kann. Hierfür kann die Ventileinheit jeweils mittels einer Steuereinrichtung entsprechend gesteuert und/oder geregelt werden, d.h. dessen Öffnungs- und Schließzeiten gesteuert und/oder geregelt werden.

Insofern das mittels einer variabel veränderbaren Pulsweitenmodulation gesteuerte Ventileinheit der Flüssigkeitsleitung zugeordnet ist, kann mittels der einen oder der mehreren Ventileinheiten insbesondere der Volumenstrom entlang der Flüssigkeitsleitung direkt geregelt bzw. beeinflusst werden.

Die eine oder die mehreren Ventileinheiten können mit einer festen oder variabel veränderbaren Frequenz mittels einer Steuereinrichtung gesteuert und/oder geregelt werden. Wobei die Frequenz hierbei größer oder gleich 1 Hz oder 10 Hz oder 50Hz oder 200 Hz sein kann.

Die Pulsweitenmodulation wird insbesondere durch einen Tastgrad definiert. Wobei dieser Tastgrad durch ein Verhältnis zwischen der Impulsdauer t (Zeitdauer) und der Periodendauer T (Schwingungsdauer) definiert sein kann. Die Impulsdauer t kann in diesem Zusammenhang auch als Ein-Zeit, welche gemäß der vorliegenden Erfindung der Öffnungszeit (d.h. Spritzflüssigkeit kann durchströmen) entspricht, bezeichnet werden.

Die Angabe des Tastgrad erfolgt zudem vorzugsweise als Prozentwert %. Der Tastgrad ist somit definiert durch t / T. Dies bedeutet, ist das Verhältnis t = 0 ist das Schaltelement permanent vollständig geschlossen (Schließzeit 100%). Wohingegen bei einem Verhältnis von t = T das Schaltelement permanent vollständig geöffnet ist (Öffnungszeit 100%).

Zur Variation der Flüssigkeitmenge, d.h. bspw. zur Variation des Tastgrad, und somit zur Steuerung und/oder Regelung der Öffnungs- und Schließzeiten mittels der die eine oder die mehreren Ventileinheiten ansteuernden Pulsweitenmodulation kann sowohl die Impulsdauer t als auch die Periodendauer T variiert werden, wobei dies jeweils mittels eines in einer Rechnereinheit der Steuereinrichtung hinterlegten Regelungsprogramms automatisiert erfolgen kann. Ebenso kann gemäß einer weiteren Ausführungsvariante eine Variation des Tastgrad manuell durch eine Bedienperson erfolgen.

In Abhängigkeit des jeweiligen Tastgrad und/oder der Frequenz kann somit die Ausbringmenge erhöht oder verringert oder zumindest weitgehend konstant gehalten werden, wobei hierbei in der Regel gilt, desto größer der Tastgrad desto größer die Ausbringmenge, da somit die Öffnungszeit vergrößert wird und desto kleiner der Tastgrad desto geringer die geförderte Flüssigkeitsmenge, da somit die Schließzeit vergrößert wird.

Es ist möglich das zur Veränderung der Flüssigkeitsmenge, die eine Ventileinheit, die zwei Ventileinheiten, die drei Ventileinheiten oder mehr Ventileinheiten zur Veränderung der Öffnungs- und Schließzeiten mit unterschiedlichen Frequenzen und/oder unterschiedlichen Tastgraden mittels der Steuereinrichtung ansteuerbar und/oder regelbar sind.

In einer erfindungsgemäßen Variante wird das Aufnahmeelement durch einen, vorzugsweise eine Mischkammer ausbildenden, Zusatztank gebildet.

Das Aufnahmeelement kann gemäß einer alternativen oder ergänzenden Ausführungsvariante auch durch ein Leitungssystem gebildet sein. Das Leitungssystem (z.B. umfassend eine Flüssigkeitsleitung) kann hierbei eine Mindestlänge von 1 Meter aufweisen, wodurch insbesondere eine Durchmischung unterschiedlicher Spritzflüssigkeiten verbessert werden kann. Das Leitungssystem kann insbesondere mit einer Spritzbalkenanordnung mit Spritzdüsen zum Verteilen der Spritzflüssigkeit in Verbindung stehen. Insbesondere ist das Leitungssystem den Ventileinheiten nachgeordnet und den Spritzdüsen vorgeordnet.

Es ist möglich, dass das Leitungssystem (z.B. die Flüssigkeitsleitung) eine Ringleitung ausbildet.

Gemäß einer Weiterbildung kann vorgesehen sein, dass der Spritzeinrichtung wenigstens eine Druckmesseinrichtung (z.B. Drucksensor) zur Erfassung des Förderdruck der Spritzflüssigkeit zugeordnet ist. Zweckmäßig kann vorgesehen sein, dass die Druckmesseinrichtung dem Druckerzeugungsglied (z.B. der Pumpe) nachgeordnet und der einen oder den mehreren Ventileinheiten vorgeordnet ist (jeweils in Bezug auf den Flüssigkeitsfluss).

Um den Flüssigkeitsdruck noch exakter definieren zu können, kann gemäß einer weiteren Ausführungsvariante auch vorgesehen sein, dass dem durch eine Pumpe gebildeten Druckerzeugungsglied ein Druckregelventil nachgeordnet ist.

Gemäß einer Weiterbildung kann vorgesehen sein, dass zur Definition der Flüssigkeitsmenge, die Öffnungs- und Schließzeiten der einen oder der mehreren Ventileinheiten mittels Pulsweitenmodulation in Abhängigkeit einer Flüssigkeitsmenge in Liter pro Minute (l/min) erfolgt, auch denkbar wäre eine Steuerung- und/oder Regelung der Öffnungs- und Schließzeiten in Liter pro Hektar (l/ha).

Eine Definition der Flüssigkeitsmenge kann gemäß einer Ausführungsvariante vorsehen, dass die Steuerung- und/oder Regelung der Öffnungs- und Schließzeiten der einen oder der mehreren Ventileinheiten durch Pulsweitenmodulation unter Berücksichtigung einer Fahrgeschwindigkeit der landwirtschaftlichen Feldspritze und/oder unter Berücksichtigung einer Arbeitsbreite der Spritzbalkenanordnung erfolgt. D.h. die benötigte Flüssigkeitsmenge kann somit durch eine Arbeitsbreite der Spritzbalkenanordnung und einer Fahrgeschwindigkeit der landwirtschaftlichen Feldspritze definiert sein. Auch können somit an verschiedenen Positionen der Spritzbalkenanordnung verschiedenen Mengen an Spritzflüssigkeit ausgebracht werden, insbesondere beim Befahren von Kurven.

Zur Erreichung unterschiedlicher Flüssigkeitsmengen ist es gemäß einer Weiterbildung zudem möglich, dass zwischen dem Vorratstank und dem Aufnahmeelement zwei Ventileinheiten oder drei Ventileinheiten oder mehr Ventileinheiten angeordnet sind, wobei deren Flüssigkeitsmengenbereiche jeweils gleich und/oder unterschiedlich sein können. So können bspw. drei Ventileinheiten mit unterschiedlichen Flüssigkeitsmengenbereichen vorgesehen sein, wobei eine erste Ventileinheit einen Flüssigkeitsmengenbereich von 0,1 bis 1 Liter / Minute aufweist, eine zweite Ventileinheit einen Flüssigkeitsmengenbereich von 1 bis 5 Liter / Minute aufweist, sowie eine dritte Ventileinheit einen Flüssigkeitsmengenbereich von 5 bis 8 Liter / Minute aufweist, wobei auch andere Flüssigkeitsmengenbereiche denkbar oder vorstellbar wären. Auch denkbar wäre es, dass bspw. bei der Verwendung von drei Ventileinheiten zwei Ventileinheiten einen identischen Flüssigkeitsmengenbereich aufweisen.

Zur Erreichung unterschiedlicher Flüssigkeitsmengen ist es gemäß einer Weiterbildung der Erfindung zudem möglich, dass zwischen dem Vorratstank und dem Aufnahmeelement zwei Ventileinheiten, drei Ventileinheiten oder mehr Ventileinheiten angeordnet sind, wobei diese jeweils mit unterschiedlicher Pulsweitenmodulation gesteuert und/oder geregelt werden. Insbesondere kann bspw. vorgesehen sein, dass die zwei, drei oder mehr Ventileinheiten jeweils mit einer gleichen Frequenz und unterschiedlichen Tastgraden mittels der Steuereinrichtung gesteuert und/oder geregelt werden.

Um die Dosierung der Flüssigkeitsmenge noch weiter zu verbessern, ist in der ersten erfindungsgemäßen, den Zusatztank umfassenden Variante vorgesehen, dass der einen oder den mehreren Ventileinheiten zumindest eine Durchflussmesseinrichtung (z.B. Durchflusssensor) nachgeordnet ist, und dass die Öffnungs- und Schließzeiten der einen oder der mehreren Ventileinheiten mittels Pulsweitenmodulation in Abhängigkeit einer mittels der Durchflussmesseinrichtung erfassten Flüssigkeitsmenge mittels der Steuereinrichtung automatisiert gesteuert und/oder geregelt werden.

Alternativ ist in einer zweiten erfindungsgemäßen Variante vorgesehen, dass dem wenigstens einen Vorratstank und/oder dem Aufnahmeelement (z.B. der Mischkammer) eine Füllstandsmesseinrichtung (z.B. Tauchsonde, Schwimmerschalter, oder dergl.) zugeordnet ist, und dass die Öffnungs- und Schließzeiten der einen oder der mehreren Ventileinheiten mittels Pulsweitenmodulation in Abhängigkeit eines mittels der Füllstandsmesseinrichtung erfassten Füllstands mittels der Steuereinrichtung automatisiert gesteuert und/oder geregelt werden. So das wiederum auf Basis sich verändernder Füllstände auf die Flüssigkeitsmenge rückgeschlossen werden kann.

Um die dosierte Flüssigkeitsmenge noch exakter zu erhalten kann zudem vorgesehen sein, dass zwei oder mehr Ventileinheiten, deren Öffnungs- und Schließzeiten mittels Pulsweitenmodulation in Abhängigkeit einer definierten Flüssigkeitsmenge mittels einer Steuereinrichtung automatisiert gesteuert und/oder geregelt werden können, hintereinander angeordnet sind. D.h., dass zwei oder mehr Ventileinheiten quasi in Reihe angeordnet (z.B. geschalten) werden können.

Zur Erhöhung der Anpassungsfähigkeit der Spritzflüssigkeit an unterschiedliche Bedingungen, ist es möglich, dass die Spritzeinrichtung zwei Vorratstanks oder mehr Vorratstanks, für zwei oder mehr, insbesondere unterschiedliche, Spritzflüssigkeiten umfasst. Wobei den zwei Vorratstanks oder mehr Vorratstanks zumindest ein Druckerzeugungsglied wirkungstechnisch zugeordnet und eine oder mehrere Ventileinheiten deren Öffnungs- und Schließzeiten mittels Pulsweitenmodulation in Abhängigkeit einer definierten Flüssigkeitsmenge mittels einer Steuereinrichtung automatisiert gesteuert und/oder geregelt werden nachgeordnet sind.

Um definieren zu können welche Spritzflüssigkeit aus welchem Tank verteilt werden soll ist es möglich, dass den zwei oder mehr Vorratstanks, insbesondere deren Auslässen nachgeordnet, jeweils ein Schaltelement zur Freigabe der Ausgabe der Spritzflüssigkeit in Richtung zu einer oder mehreren Ventileinheiten zugeordnet ist.

Es ist möglich, dass die Spritzeinrichtung zwei oder mehr Ventileinheiten umfasst, wobei jeweils in Abhängigkeit einer erforderlichen Flüssigkeitsmenge eine Dosierung von Spritzflüssigkeit mit einer Ventileinheit oder mit zwei Ventileinheiten oder mit mehr Ventileinheiten erfolgt.

Es ist möglich, dass die Spritzeinrichtung zwei oder mehr Ventileinheiten umfasst, wobei zumindest eine Ventileinheit nicht mit Pulsweitenmodulation gesteuert und/oder geregelt wird.

Um den Flüssigkeitsstrom der Spritzflüssigkeit nach der einen oder den mehreren Ventileinheiten zum Harmonisieren, kann der einen und/oder den mehreren Ventileinheiten zumindest ein Drosselelement nachgeordnet sein, insbesondere stromabwärts nachgeordnet sein.

Das Spritzsystem kann insbesondere ein sog. Direkteinspeisesystem für Spritzflüssigkeiten ausbilden und/oder ein derartiges mit umfassen.

Die Spritzflüssigkeit kann bspw. eine Trägerflüssigkeit (z.B. Wasser) sein und/oder ein Wirkstoffkonzentrat (z.B. Pflanzenschutzmittel, Dünger oder dergl.) sein. Auch kann die Spritzflüssigkeit ein Gemisch aus einer Trägerflüssigkeit und einem Wirkstoffkonzentrat kann.

Es ist möglich, dass die Spritzeinrichtung zwei oder mehr Vorratstanks aufweist, wobei in einem der Vorratstank eine Trägerflüssigkeit und in einem anderen Vorratstank ein Wirkstoffkonzentrat mitgeführt werden kann und wobei im Aufnahmeelement (z.B. der Mischkammer) eine Vermischung der Trägerflüssigkeit und des Wirkstoffkonzentrat erfolgen kann, wobei wiederum durch die Verwendung von Ventileinheiten mit Pulsweitenmodulation die jeweiligen Mengen an Trägerflüssigkeit und Wirkstoffkonzentrat sehr exakt eingehalten werden können.

Es ist möglich, dass an der Spritzbalkenanordnung Spritzdüsen angeordnet sind, vorzugsweise derartige welche mittels Pulsweitenmodulation steuerbar und/oder regelbar sind. Wobei diesen Spritzdüsen wiederum kein Aufnahmeelement nachgeordnet ist und wobei diese Spritzdüsen derartig ausgebildet sind um die Spritzflüssigkeit zu zerstäuben, vorzugsweise derartig um die Spritzflüssigkeit in einem gewünschten Spritzmuster auf einer landwirtschaftlichen Nutzfläche zu verteilen.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Datenverarbeitungseinrichtungen. Ebenso sei darauf hingewiesen, dass die Sensoren / Messeinrichtungen / Erfassungseinrichtungen etc. jeweils als Rückkoppelung für eine Steuer- und/oder Regelgröße herangezogen werden können.

Es sei noch darauf hingewiesen, dass die Begriffe "Steuern" und "Regeln" bzw. "Steuereinrichtung" und "Regelungseinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sollen im Zusammenhang mit der Spritzeinrichtung offenbarte Merkmale auch für eine Landwirtschaftliche Verteilmaschine sowie Verfahrensgemäß offenbart gelten und beanspruchbar sein. Die vorgenannten Aspekte und erfindungsgemäßen Merkmale und Ausführungsvarianten, insbesondere im Hinblick auf die Spritzeinrichtung gelten somit auch für die landwirtschaftliche Feldspritze sowie für das Verfahren. In umgekehrter Weise gilt das gleiche, so dass auch alle Aspekte, erfindungsgemäße Merkmale und Ausführungsvarianten die im Zusammenhang mit der landwirtschaftlichen Feldspritze oder dem Verfahren offenbart sind, demnach auch für die Spritzeinrichtung offenbart und entsprechend beanspruchbar sind.

Die Erfindung umfasst zur Lösung der Aufgaben zudem eine landwirtschaftliche Feldspritze. Die landwirtschaftlichen Feldspritze umfasst hierbei vorzugsweise ein, eine Rahmenkonstruktion aufweisendes Chassis und eine Spritzeinrichtung wie hierin offenbart, eine Spritzeinrichtung nach einem der Patentansprüche 1 bis 13.

Das Chassis kann zudem ein Fahrwerk aufweisen, bzw. kann dem Chassis ein Fahrwerk zugeordnet sein.

Die landwirtschaftliche Feldspritze kann als eine selbstfahrende oder als eine mittels eines Zugfahrzeug (z.B. Traktor) gezogene oder als eine an einem Zugfahrzeug angebaute (z.B. mittels Dreipunkt-Anhängung) Feldspritze ausgeführt sein. Gemäß einer bevorzugten ausführungsvariante kann die Feldspritze ein Chassis mit einem Fahrwerk sowie eine Spritzeinrichtung aufweisen, wobei vorgesehen sein kann, dass der Vorratstank, dass Aufnahmeelement und die Spritzbalkenanordnung am Chassis (z.B. der Rahmenkonstruktion) angebaut und/oder gelagert sind.

Zudem umfasst die Erfindung zur Lösung der Aufgaben ein Verfahren zum Betreiben einer Spritzeinrichtung. Die Spritzeinrichtung weist wenigstens, einen Vorratstank, für wenigstens eine Spritzflüssigkeit, wenigstens ein Aufnahmeelement zur Aufnahme und/oder Weiterleitung der Spritzflüssigkeit, ein Druckerzeugungsglied, zur Erzeugung eines Förderdruck zur Förderung der Spritzflüssigkeit vom Vorratstank zum Aufnahmeelement, eine oder mehrere zwischen dem wenigstens einen Vorratstank und dem Aufnahmeelement angeordnete Ventileinheiten, eine Spritzbalkenanordnung mit Spritzdüsen zum Verteilen der Spritzflüssigkeit, auf.

Das Verfahren ist gekennzeichnet durch, ein automatisiertes Steuern und/oder Regeln der Öffnungs- und Schließzeiten der einen oder der mehreren Ventileinheiten mittels Pulsweitenmodulation PWM in Abhängigkeit einer definierten Flüssigkeitsmenge mittels einer Steuereinrichtung.

Es ist Verfahrensgemäß möglich, dass ein steuern und/oder regeln der Öffnungs- und/oder Schließzeiten der einen oder der mehreren Ventileinheiten mittels Pulsweitenmodulation mittels der Steuereinrichtung erfolgt, vorzugsweise in Abhängigkeit
- eines Förderdruck und/oder
- einer, mittels einer der einen oder den mehreren Ventileinheiten nachgeordneten Durchflussmesseinrichtung, erfassten Flüssigkeitsmenge und/oder
- eines, mittels einer dem Vorratstank und/oder dem Aufnahmeelement zugeordneten Füllstandsmesseinrichtung, erfassten Füllstands.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Perspektivansicht einer landwirtschaftlichen Feldspritze mit einem, eine Rahmenkonstruktion aufweisenden Chassis und einer Spritzeinrichtung,
- Figur 2A: eine schematische Darstellung einer Ausführungsvariante einer erfindungsgemäßen Spritzeinrichtung, mit einem Vorratstank, einer Ventileinheit und einem als Zusatztank ausgeführten Aufnahmeelement,
- Figur 2B: eine schematische Darstellung einer Ausführungsvariante einer erfindungsgemäßen Spritzeinrichtung, mit einem Vorratstank, einer Ventileinheit und einem als Leitungssystem ausgeführten Aufnahmeelement,
- Figur 3A: eine schematische Darstellung einer Ausführungsvariante einer erfindungsgemäßen Spritzeinrichtung, mit einem Vorratstank, drei Ventileinheiten und einem als Zusatztank ausgeführten Aufnahmeelement, wobei die Ventileinheiten jeweils zur Dosierung unterschiedlicher Flüssigkeitsmengen ausgebildet sind,
- Figur 3B: eine schematische Darstellung einer Ausführungsvariante einer erfindungsgemäßen Spritzeinrichtung, mit einem Vorratstank, drei Ventileinheiten und einem als Leitungssystem ausgeführten Aufnahmeelement, wobei die Ventileinheiten jeweils zur Dosierung unterschiedlicher Flüssigkeitsmengen ausgebildet sind,
- Figur 4A: eine schematische Darstellung einer Ausführungsvariante einer erfindungsgemäßen Spritzeinrichtung, mit zwei Vorratstanks, drei Ventileinheiten, einem als Zusatztank ausgeführten Aufnahmeelement und einer durch drei Teilbreiten gebildeten Spritzbalkenanordnung,
- Figur 4B: eine schematische Darstellung einer Ausführungsvariante einer erfindungsgemäßen Spritzeinrichtung, mit zwei Vorratstanks, drei Ventileinheiten, einem als Verteileinheit ausgeführten Aufnahmeelement und einer durch drei Teilbreiten gebildeten Spritzbalkenanordnung,
- Figur 5: eine schematische Darstellung einer Ausführungsvariante einer erfindungsgemäßen Spritzeinrichtung, mit mehreren Vorratstanks, mehreren Aufnahmeelementen und einer durch vier Teilbreiten gebildeten Spritzbalkenanordnung.

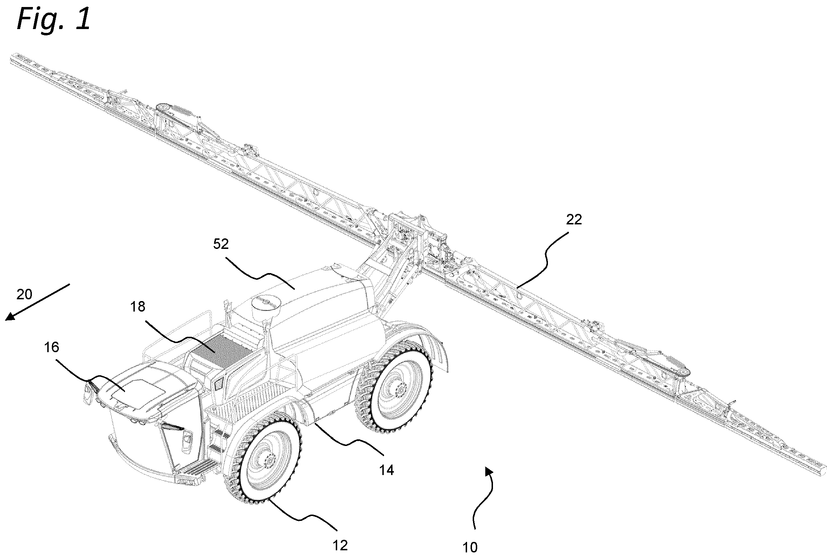

Die in den Figuren 1 bis 5 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße Spritzeinrichtung, die erfindungsgemäße landwirtschaftliche Feldspritze und das erfindungsgemäße Verfahren ausgestaltet und ausgeführt sein können und stellen keine abschließende Begrenzung dar.

Es sei vorab darauf hingewiesen, dass insofern nicht beschrieben, die zwischen den Komponenten der Spritzeinrichtung angeordneten Verbindungen, durch jegliche Art von Flüssigkeiten fördernden bzw. weiterleitenden Flüssigkeitsleitungen gebildet werden können, bspw. durch Schlauchleitungen, Rohrleitungen und/oder dergl. Leitungs- und Verbindungssysteme.

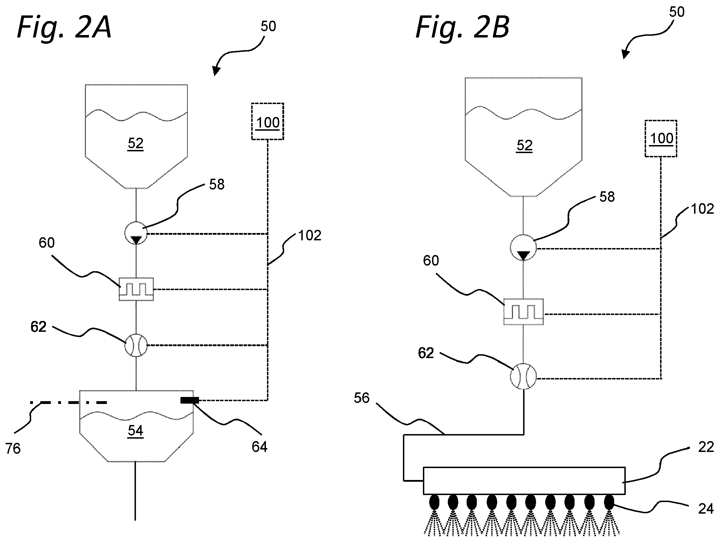

Es sei zudem darauf hingewiesen, dass die Flussrichtung in den Ausführungsbeispielen der Figuren 2 bis 5 der Spritzflüssigkeit jeweils ausgehend von einem der Vorratstanks 52; 52a; 52b; 52c in Richtung zu den Spritzdüsen ist, auch wenn dies nicht ausdrücklich beschrieben wird.

Figur 1 zeigt in einer Perspektivansicht eine Ausführungsvariante einer landwirtschaftlichen Feldspritze 10 mit einem, eine Rahmenkonstruktion aufweisenden Chassis 14. Wobei das Chassis 14 zudem ein Fahrwerk 12 aufweist. Die Feldspritze 10 ist als eine selbstfahrende Feldspritze 10 ausgeführt und umfasst eine Kabine 16, mit einem Bedienstand für eine Bedienperson und eine Antriebseinrichtung 18 (z.B. Motor). Im hinteren Bereich umfasst die Feldspritze 10 eine sich in einer Arbeitsstellung befindende und sich in großer Arbeitsbreite (z.B. 24 Meter oder mehr) quer zur Fahrtrichtung 20 erstreckende Spritzbalkenanordnung 22, wobei die Spritzbalkenanordnung 22 höhenverstellbar gegenüber dem Chassis 14 ist.

Die Spritzbalkenanordnung 22 wird durch oder ist als ein Spritzgestänge ausgebildet.

Am Chassis 14 ist zudem eine erfindungsgemäße Spritzeinrichtung 50 angebaut, wobei in der Figur 1 hiervon lediglich ein Vorratstank 52 und die Spritzbalkenanordnung 22 dargestellt sind.

Die Figuren 2A und 2B zeigen jeweils in schematischen Dartstellungen einfache Ausführungsvarianten von erfindungsgemäßen Spritzeinrichtungen 50. Die Spritzeinrichtungen 50 umfassen jeweils einen Vorratstank 52 für wenigstens eine Spritzflüssigkeit (z.B. Wasser, Pflanzenschutzmittel, Dünger und/oder dergl.).

Die Spritzeinrichtung 50 umfasst jeweils ein Aufnahmeelement, wobei dieses gemäß der Figur 2A als ein, eine Mischkammer ausbildender, Zusatztank 54 ausgeführt ist und wobei dieses gemäß der Figur 2B durch das Leitungssystem 56 (z.B. eine Flüssigkeitsleitung) gebildet ist. Das Aufnahmeelement dient insbesondere zur Aufnahme und/oder Weiterleitung der Spritzflüssigkeit, bspw. in Richtung zu einer Spritzbalkenanordnung 22, bzw. zu an der Spritzbalkenanordnung 22 angeordneten Spritzdüsen 24 zum Verteilen, zweckmäßig vorzugsweise zum Zerstäuben, der Spritzflüssigkeit.

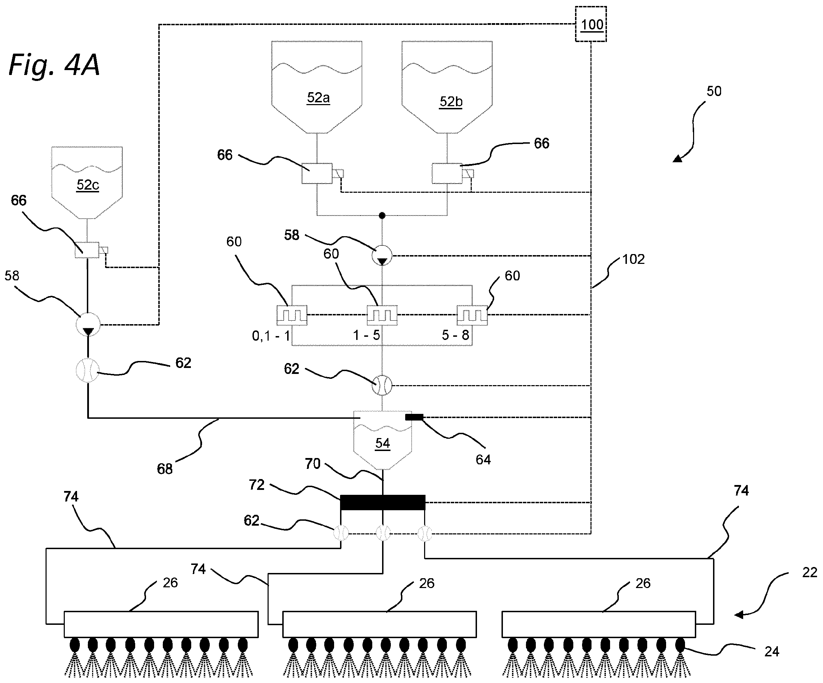

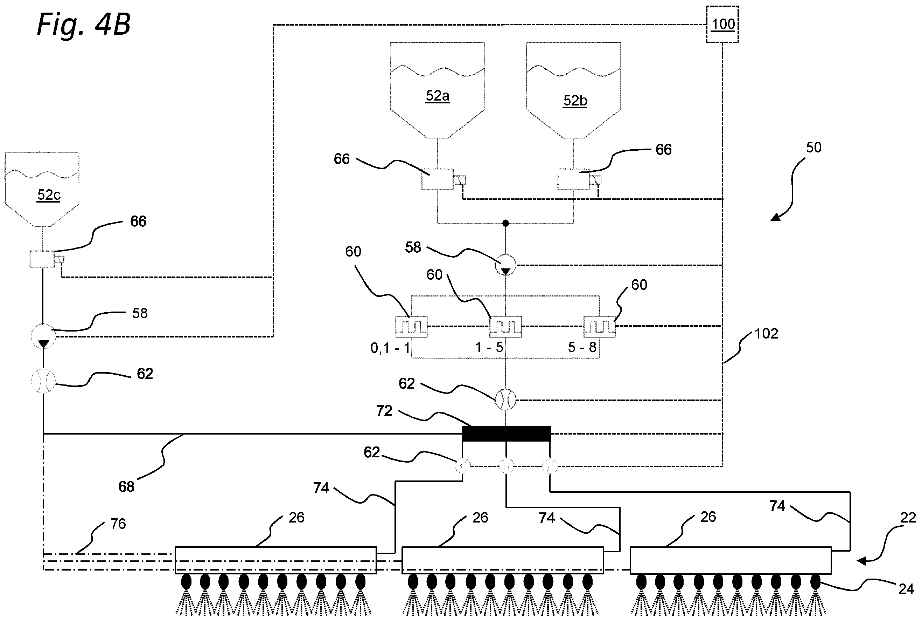

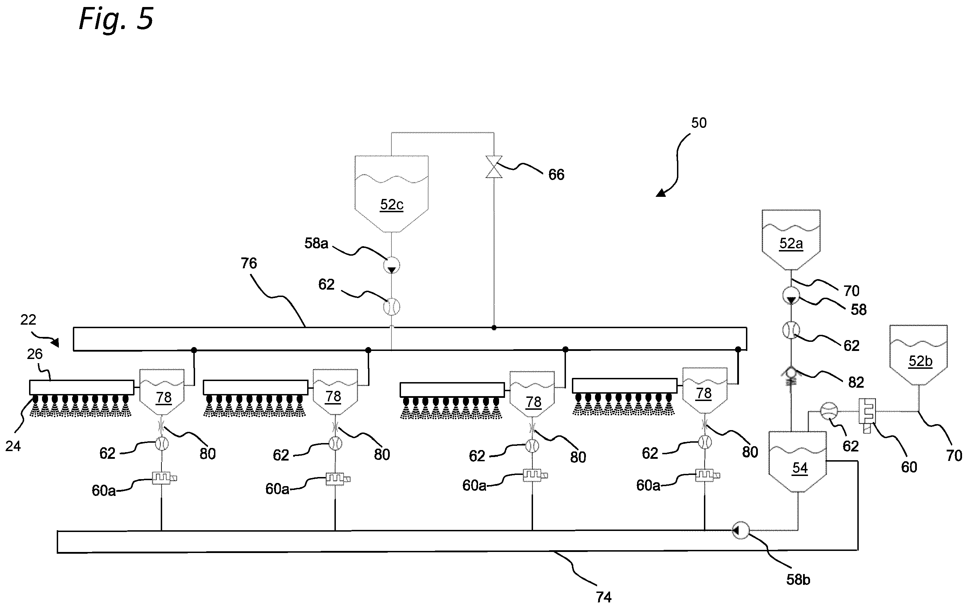

Der Zusatztank 54 kann als Aufnahmeelement vorzugsweise eine Mischkammer bilden in welche Spritzflüssigkeit von ein, zwei oder mehr Vorratstanks 52; 52a; 52b; 52c (vergl. Figur 4A; 4B und 5) abgegeben wird.

Um die Spritzflüssigkeit vom Vorratstank 52 mit einem konstanten Förderdruck in Richtung des Aufnahmeelement zu fördern, umfasst die Spritzeinrichtung 50 ein Druckerzeugungsglied in Form einer Pumpe 58 (z.B. Kolbenpumpen, Kreiselpumpe oder dergl.). Wobei wiederum mittels dieses Förderdruck die Spritzflüssigkeit auch in Richtung der Spritzdüsen gefördert werden kann. Alternativ wäre es auch denkbar, dass der Förderdruck mittels eines Kompressors erzeugt wird, welcher bspw. wirkungstechnisch mit dem Vorratstank 52 verbunden ist.

Die Spritzeinrichtung 50 umfasst zudem eine Ventileinheit 60, wobei deren Öffnungs- und Schließzeiten mittels Pulsweitenmodulation in Abhängigkeit einer definierten Flüssigkeitsmenge mittels einer Steuereinrichtung automatisiert gesteuert und/oder geregelt wird. Wobei dies zweckmäßig insbesondere intervallweise und kontinuierlich erfolgen kann.

Zur Überwachung der korrekten Flüssigkeitsmenge umfasst die Spritzeinrichtung 50 zudem eine Durchflussmesseinrichtung 62 (z.B. Durchflusssensor). Alternativ oder ergänzend zu einer Durchflussmesseinrichtung 62 wäre es auch denkbar, dass dem wenigstens einen Vorratstank 52 und/oder dass dem Aufnahmeelement, insbesondere dem Zusatztank 54, eine Füllstandsmesseinrichtung 64 (z.B. Tauchsonde, Schwimmerschalter, oder dergl.) zugeordnet ist, und wiederum die Öffnungs- und Schließzeiten der Ventileinheit 60 anhand eines sich verändernden Füllstands im Vorratstank 52 und/oder im Zusatztank 54 gesteuert und/oder geregelt werden.

In den Zusatztank 54 kann zudem bspw. eine Hauptleitung 76 (z.B. in Form einer Flüssigkeitsleitung) münden und diesem eine weitere Spritzflüssigkeit (z.B. Trägerflüssigkeit) zuführen.

Die Steuereinrichtung weist gemäß der Ausführungsbeispiele der Figuren 2 bis 4 eine Rechnereinheit 100 auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist, wobei diese Signal- und/oder Befehlsübertragungselemente 102 gemäß der Ausführungsbeispiele der Figuren 2 bis 4 jeweils durch gestrichelte Linien dargestellt sind.

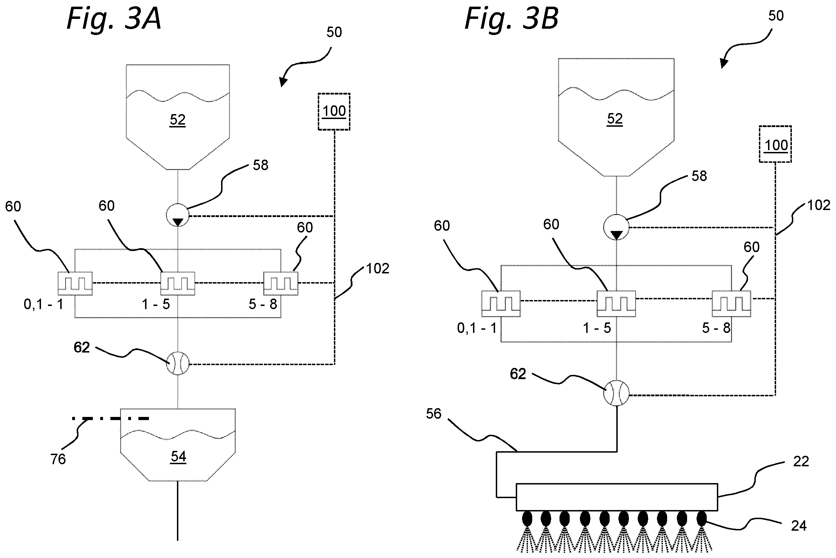

Die Figuren 3A und 3B zeigen jeweils in schematischen Darstellungen alternative Ausführungsvarianten von erfindungsgemäßen Spritzeinrichtungen 50. Die Spritzeinrichtung 50 umfasst einen Vorratstank 52 für wenigstens eine Spritzflüssigkeit. Darüber hinaus umfasst die Spritzeinrichtung 50 jeweils ein Aufnahmeelement, welches gemäß Figur 3A durch einen Zusatztank 54 und gemäß Figur 3B durch ein Leitungssystem 56 (z.B. Flüssigkeitsleitung) gebildet ist, wobei das Leitungssystem 56 zudem zweckmäßig insbesondere eine Mindestlänge von 1 Meter aufweist und sich zwischen den Ventileinheiten 60 und den Spritzdüsen 24 erstreckt. Das Aufnahmeelement dient zur Aufnahme und/oder Weiterleitung der Spritzflüssigkeit, bspw. in Richtung zu einer, Spritzdüsen 24 aufweisenden Spritzbalkenanordnung 22, zur Verteilung dieser auf bspw. einer landwirtschaftlichen Nutzfläche (z.B. Ackerfläche und/oder Pflanzenbestand).

Um die Spritzflüssigkeit vom Vorratstank 52 mit einem konstanten Förderdruck in Richtung des Aufnahmeelement zu fördern, umfasst die Spritzeinrichtung 50 eine Druckerzeugungsglied, insbesondere eine Pumpe 58.

Um eine möglichst exakte Dosierung der Flüssigkeitsmenge vom Vorratstank 52 zum Aufnahmeelement zu erreichen, umfasst die Spritzeinrichtung 50 zudem drei Ventileinheiten 60. Wobei die Ventileinheiten 60 jeweils derartig ausgeführt sind, dass deren Öffnungs- und Schließzeiten mittels Pulsweitenmodulation in Abhängigkeit einer definierten, d.h. benötigten, Flüssigkeitsmenge mittels einer Steuereinrichtung automatisiert gesteuert und/oder geregelt werden können.

Erfindungsgemäß kann insbesondere vorgesehen sein, dass die Öffnungs- und Schließzeiten der einen oder der mehreren Ventileinheiten 60 mittels Pulsweitenmodulation in Abhängigkeit einer definierten Flüssigkeitsmenge mittels einer Steuereinrichtung automatisiert gesteuert und/oder geregelt werden können, wobei mittels der Steuereinrichtung intervallweise und kontinuierlich in Abhängigkeit der Öffnungs- und Schließzeiten zwischen einer geöffneten Stellung und einer geschlossenen Stellung der einen oder der mehreren Ventileinheiten 60 gewechselt wird.

Die drei Ventileinheiten 50 weisen jeweils einen Flüssigkeitsmengenbereich auf, d.h. die drei Ventileinheiten 60 sind jeweils derartig ausgeführt, dass mittels dieser jeweils unterschiedlichen Flüssigkeitsmengen dosiert werden können. Dies hat den Vorteil, dass die drei Ventileinheiten 50 jeweils in deren optimalen Wirkungsbereichen betrieben werden können und somit deren Wirkungsgrad optimal genutzt werden kann und zudem die Dosierung noch exakter ausgeführt werden kann. Wobei bspw. eine erste Ventileinheit 60 einen Flüssigkeitsmengenbereich von 0,1 bis 1 Liter pro Minute aufweisen kann eine zweite Ventileinheit 60 einen Flüssigkeitsmengenbereich von 1 bis 5 Liter pro Minute aufweisen kann und eine dritte Ventileinheit 60 einen Flüssigkeitsmengenbereich von 5 bis 8 Liter pro Minute aufweisen kann

Zur Überwachung der korrekten Flüssigkeitsmenge umfasst die Spritzeinrichtung 50 zudem eine Durchflussmesseinrichtung 62 (z.B. Durchflusssensor). Alternativ oder ergänzend zu einer Durchflussmesseinrichtung 62 wäre es auch denkbar, dass dem Aufnahmeelement, insbesondere dem Zusatztank 54, eine Füllstandsmesseinrichtung 64 (z.B. Tauchsonde, Schwimmerschalter, oder dergl.) zugeordnet ist, und wiederum die Öffnungs- und Schließzeiten der Ventileinheit 60 anhand eines sich verändernden Füllstands im Zusatztank 54 gesteuert und/oder geregelt werden.

Zwei weitere Ausführungsvarianten einer Spritzeinrichtung 50 gehen aus der schematischen Darstellung der Figur 4A und 4B hervor. Die Spritzeinrichtung 50 ist insbesondere als ein Direkteinspeisesystem ausgeführt.

Die Spritzeinrichtung 50 umfasst drei Vorratstanks 52 insbesondere einen ersten Vorratstank 52a, einen zweiten Vorratstank 52b und einen dritten Vorratstank 52c für Spritzflüssigkeit, vorzugsweise für unterschiedliche Spritzflüssigkeiten. Wobei vorzugsweise vorgesehen sein kann, dass im dritten Vorratstank 52c als Spritzflüssigkeit eine Trägerflüssigkeit (z.B. Wasser) mitgeführt wird. Zudem kann vorgesehen sein, dass im ersten Vorratstank 52a und im zweiten Vorratstank 52b als Spritzflüssigkeit ein Wirkstoffkonzentrat (z.B. Pflanzenschutzmittel, Dünger und/oder dergl.) mitgeführt wird.

Zur Freigabe der Ausgabe von Spritzflüssigkeit ist jedem Vorratstank 52a; 52b; 52c ein Schaltelement 66 zugeordnet, wobei das Schaltelement 66 vorzugweise ein Ventil, Absperrhahn und/oder dergl. sein kann, und wobei das Schaltelement 66 manuell bspw. durch eine Bedienperson und/oder automatisiert mittels der Steuereinrichtung geöffnet und geschlossen werden kann, wobei hierfür wiederum das Schaltelement 66 zur Signal- und/oder Befehlsübertragung mit der Rechnereinheit 100 signalverbunden und/oder signalverbindbar ist.

Die Spritzflüssigkeit des dritten Vorratstank 52c (z.B. die Trägerflüssigkeit) wird mittels einer Pumpe 58 (z.B. Kolbenpumpe, Kreiselpumpe oder dergl.) entlang einer Verbindungsleitung 68 in ein Aufnahmeelement gefördert, wobei das Aufnahmeelement gemäß dem Ausführungsbeispiel der Figur 4A als ein Zusatztank 54 (z.B. Mischkammer) ausgebildet ist und gemäß der Figur 4B als eine Verteileinheit 72 mit integrierter Mischkammer ausgebildet ist.

Zur Überwachung der vom dritten Vorratstank 52c zum Aufnahmeelement geförderten Flüssigkeitsmenge ist zwischen dem dritten Vorratstank 52c und dem Aufnahmeelement eine Durchflussmesseinrichtung 62 angeordnet, vorzugsweise ist diese der Pumpe 58 nachgeordnet (in Bezug auf eine Flussrichtung).

Im Aufnahmeelement, d.h. im Zusatztank 54 bzw. in der Mischkammer, kann insbesondere die Spritzflüssigkeit des dritten Vorratstank 52c mit der Spritzflüssigkeit (z.B. Wirkstoffkonzentrat) des ersten Vorratstank 52a und/oder des zweiten Vorratstank 52b vermischt werden.

Um die Spritzflüssigkeit vom ersten Vorratstank 52a und/oder vom zweiten Vorratstank 52b mit einem konstanten Druck (z.B. 5 Bar) in Richtung des Aufnahmeelement zu fördern, umfasst die Spritzeinrichtung 50 zudem eine zwischen dem ersten Vorratsbehälter 52a und dem zweiten Vorratsbehälter 52b sowie dem Aufnahmeelement (Zusatztank 54) angeordnete Pumpe 58 (z.B. Druckerzeugungsglied).

Um eine möglichst exakte Dosierung der Flüssigkeitsmenge vom ersten Vorratstank 52a und/oder vom zweiten Vorratstank 52b zum Aufnahmeelement zu erreichen, umfasst die Spritzeinrichtung 50 zudem drei Ventileinheiten 60. Wobei die Ventileinheiten 60 jeweils derartig ausgeführt sind, dass deren Öffnungs- und Schließzeiten mittels Pulsweitenmodulation in Abhängigkeit einer definierten, d.h. benötigten, Flüssigkeitsmenge mittels einer Steuereinrichtung automatisiert gesteuert und/oder geregelt werden können.

Die drei Ventileinheiten 50 weisen jeweils einen Flüssigkeitsmengenbereich auf, d.h. die drei Ventileinheiten 60 sind jeweils derartig ausgeführt, dass mittels dieser jeweils unterschiedliche Flüssigkeitsmengen dosiert werden können.

Erfindungsgemäß kann insbesondere vorgesehen sein, dass die Öffnungs- und Schließzeiten der drei Ventileinheiten 60 mittels Pulsweitenmodulation in Abhängigkeit einer definierten Flüssigkeitsmenge mittels einer Steuereinrichtung automatisiert gesteuert und/oder geregelt werden, wobei mittels der Steuereinrichtung intervallweise und kontinuierlich in Abhängigkeit der Öffnungs- und Schließzeiten zwischen einer geöffneten Stellung und einer geschlossenen Stellung der einen oder der mehreren Ventileinheiten 60 gewechselt wird.

Zur Überwachung der korrekten Flüssigkeitsmenge umfasst die Spritzeinrichtung 50 zudem eine Durchflussmesseinrichtung 62 (z.B. Durchflusssensor). Alternativ oder ergänzend zu einer Durchflussmesseinrichtung 62 wäre es auch denkbar, dass dem wenigstens einen Vorratstank 52 und/oder dass dem Aufnahmeelement, insbesondere dem Zusatztank 54, eine Füllstandsmesseinrichtung 64 (z.B. Tauchsonde, Schwimmerschalter, oder dergl.) zugeordnet ist, und wiederum die Öffnungs- und Schließzeiten der Ventileinheit 60 anhand eines sich verändernden Füllstands im Vorratstank 52 und/oder im Zusatztank 54 gesteuert und/oder geregelt werden. Ebenso denkbar wäre es, dass der Verteileinheit 72 entsprechende Sensorik zugeordnet ist, insbesondere, dass der in der Verteileinheit 72 integrierten Mischkammer wiederum eine Füllstandsmesseinrichtung 64 zugeordnet ist.

Gemäß der Figur 4A kann die somit im Zusatztank 54 gemischte Spritzflüssigkeit, insbesondere das Gemisch aus Wasser und Pflanzenschutzflüssigkeit und/oder Dünger anschließend wiederum mittels einer Flüssigkeitsleitung 70 in Richtung zu einem Verteiler 72 gefördert werden.

Gemäß der Figur 4B können die Spritzflüssigkeiten der drei Vorratstanks 52a; 52b; 52c auch zu einem Verteiler 72 gefördert werden, welcher Verteiler 72 wiederum eine, hier nicht dargestellte Mischkammer aufweisen kann.

Nachfolgend an den Verteiler 72 folgt jeweils eine Spritzbalkenanordnung 22 mit einer Mehrzahl von an diesen angeordneten Spritzdüsen 24 zum Verteilen der Spritzflüssigkeit. Gemäß der Figuren 4 ist die Spritzbalkenanordnung 24 in drei Teilbreiten 26 unterteilt, es wären jedoch auch mehr oder weniger Teilbreiten 26 denkbar.

Vom Verteiler 72 mündet jeweils eine Spritzleitung 74 (z.B. Flüssigkeitsleitung) in jede der Teilbreiten 26, dadurch wird es möglich, dass die Teilbreiten 26 jeweils mit variablen Mengen an Spritzflüssigkeit versorgt werden können und auch die Verteilung von Spritflüssigkeit mit einzelnen Teilbreiten 26 unterbrochen werden kann. Um sicher zu stellen, dass jede Teilbreite 26 mit der Richtigen Flüssigkeitsmenge versorgt wird, können den Spritzleitungen 74 wiederum Durchflussmesseinrichtungen 62 zugeordnet sein.

Wie zudem aus der Figur 4B hervorgeht, kann auch vorgesehen sein, dass die Spritzflüssigkeit des dritten Vorratstank 52c mittels Hauptleitungen 76 direkt zu den einzelnen Teilbreiten 26 gefördert wird, so dass an jeder Teilbreite 26 wiederum verschiedene Spritzflüssigkeiten ausgebracht werden können. Dies wird gemäß der Figur 4B durch Strich - Punkt - Linien dargestellt.

Ein weiteres Ausführungsbeispiel einer Spritzeinrichtung 50 geht aus der schematischen Darstellung der Figur 5 hervor.

Es sei darauf hingewiesen, dass wegen der Übersichtlichkeit in der Figur 5 auf eine Darstellung der Signal- und/oder Befehlsübertragungselemente im Gegensatz zu den Figuren 2 bis 4 verzichtet wurde, die Elemente und Komponenten im Ausführungsbeispiel der Figur 5 jedoch ebenso mit einer Steuereinrichtung zur Signal- und/oder Befehlsübertragung verbunden sind. Zum besseren Verständnis sind in der Figur 5 dementsprechend lediglich die Flüssigkeiten führenden Leitungs- und Verbindungssysteme bzw. Flüssigkeitsleitungen dargestellt.

Die Spritzeinrichtung 50 umfasst zunächst eine Spritzbalkenanordnung 22 welche in vier Teilbreiten 26 mit jeweils einer Mehrzahl von Spritzdüsen 24 aufgeteilt ist.

Die Spritzeinrichtung 50 umfasst zudem einen Vorratstank 52, welcher zudem den Haupttank bildet. Mit diesem Vorratstank 52 kann insbesondere eine Spritzflüssigkeit mitgeführt werden, vorzugsweise diejenige Spritzflüssigkeit mitgeführt werden, von welcher die größte Menge benötigt wird.

Mittels einer Hauptpumpe 58a wird die Spritzflüssigkeit des Vorratstank 52 mittels einer, eine Ringleitung ausbildenden Hauptleitung 76 entlang der Teilbreiten 26 bzw. zu den Teilbreiten zugeordneten Zwischenbehältern 78 zugeführt. Wobei auch wiederum diese Zwischenbehälter 78 als Zusatztank und/oder als Mischkammer dienen können.

Um die entlang der Hauptleitung 76 geförderte Menge an Spritzflüssigkeit zu überwachen ist der Hauptleitung 76 zudem eine Durchflussmesseinrichtung 62 zugeordnet. Darüber hinaus ist der Hauptleitung 76 ein Schaltelement 66 zugeordnet, um eine Förderung von Spritzflüssigkeit entlang der Hauptleitung 76 zu aktivieren oder deaktivieren. Es ist somit auch denkbar, dass eine Verteilung von Spritzflüssigkeit nur aus dem Vorratstank 52 erfolgt.

Die Spritzeinrichtung 50 ist als sog. Direkteinspeisesystem ausgeführt, d.h. es können mehrere verschiedene Spritzflüssigkeiten mit der Spritzeinrichtung 50 ausgebracht werden. Um dies zu erreichen, umfasst die Spritzeinrichtung 50 darüber hinaus zumindest einen zusätzlichen ersten Vorratstank 52a und einen zweiten Vorratstank 52b. Wobei wiederum der erste Vorratstank 52a und der zweite Vorratstank 52b mit jeweils einer Flüssigkeitsleitung 70 mit einem Aufnahmeelement bzw. mit einem Zusatztank 54 verbunden sind.

Im ersten Vorratstank 52a und im zweiten Vorratstank 52b werden vorzugsweise unterschiedliche Spritzflüssigkeiten mitgeführt, insbesondere wird im zweiten Vorratstank 52b ein Wirkstoffkonzentrat mitgeführt, von welchem nur geringe Flüssigkeitsmengen benötigt werden. Um eine exakte Dosierung der Spritzflüssigkeit des zweiten Vorratstank 52b in den Zusatztank 54 zu erreichen, ist eine Ventileinheit 60 vorgesehen wobei zudem vorgesehen ist, dass die Öffnungs- und Schließzeiten der einen Ventileinheit 60 mittels Pulsweitenmodulation in Abhängigkeit einer definierten Flüssigkeitsmenge (z.B. benötigte Menge des Wirkstoffkonzentrat) mittels einer Steuereinrichtung automatisiert gesteuert und/oder geregelt werden. Zur Überwachung der richtigen Menge an Spritzflüssigkeit kann zudem eine Durchflussmesseinrichtung 62 vorgesehen sein.

Zur Förderung der Spritzflüssigkeit aus dem ersten Vorratsbehälter 52a kann eine Pumpe 58 zur Erzeugung eines Förderdruck vorgesehen sein, sowie dieser Nachgeordnet wiederum eine Durchflussmesseinrichtung 62.

Um ein zurückströmen von Spritzflüssigkeit aus dem Zusatztank 54 in Richtung des ersten Vorratstank 52a zu verhindern ist darüber hinaus ein Sperrventil 82 bzw. ein Rückschlagventil vorgesehen.

Die somit im Zusatztank 54 angemischte Spritzflüssigkeit wird anschließend entlang einer, als Ringleitung ausgeführten Spritzleitung 74 (z.B. Flüssigkeitsleitung) wiederum entlang der Teilbreiten 26 bzw. zu den Teilbreiten 26 zugeordneten Zwischenbehältern 78 zugeführt. Wobei nun wiederum in den Zwischenbehältern 78 die Spritzflüssigkeit des Vorratstank 52 mit der Spritzflüssigkeit aus dem Aufnahmeelement bzw. dem Zusatztank 54 vermischt werden kann und anschließend mittels der Spritzdüsen 24 verteilt werden kann.

Zum Fördern der Spritzflüssigkeit des Zusatztank 54 entlang der Spritzleitung 74, insbesondere mit einem zumindest weitgehend konstanten Förderdruck, ist der Spritzleitung 74 zudem eine Zusatzpumpe 58b zugeordnet.

Um wiederum den Zwischenbehältern 78 eine exakte Flüssigkeitsmenge an Spritzflüssigkeit des Zusatztank 54 zuzuführen sind wiederum Zusatzventileinheiten 60a vorgesehen, welche vorzugsweise die gleiche Funktionsweise wie die Ventileinheiten 60 aufweisen können, d.h. welche ebenfalls so ausgeführt sein können, dass deren Öffnungs- und Schließzeiten mittels Pulsweitenmodulation gesteuert und/oder geregelt werden. Auch andere Ventileinheiten wären jedoch denkbar. Zur Überwachung der richtigen Flüssigkeitsmenge sind zudem wiederum Durchflussmesseinrichtungen 62 vorgesehen, sowie zum Homogenisieren des Flüssigkeitsflusses jeweils eine Drossel 80.

Mit einem Spritzsystem 50 gemäß der Figur 5 können somit verschiedensten Spritzflüssigkeiten in beliebiger Art und Weise vermischt werden, wobei die jeweiligen Flüssigkeitsmengen der Spritzflüssigkeit durch die Verwendung von Ventileinheiten 60 welche mit Pulsweitenmodulation gesteuert und/oder geregelt werden können sehr exakt eingehalten werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, die in den Bereich der beigefügten Patentansprüche fallen.

**Bezugszeichenliste:**

| | | | |
|---|---|---|---|
| 10 | Landwirtschaftliche Feldspritze | 58b | Zusatzpumpe |
| 12 | Fahrwerk | 60 | Ventileinheit |
| 14 | Chassis | 60a | Zusatzventileinheit |
| 16 | Kabine | 62 | Durchflussmesseinrichtung |
| 18 | Antriebseinrichtung | 64 | Füllstandsmesseinrichtung |
| 20 | Fahrtrichtung | 66 | Schaltelement |
| 22 | Spritzbalkenanordnung | 68 | Verbindungsleitung |
| 24 | Spritzdüsen | 70 | Leitung, Flüssigkeitsleitung |
| 26 | Teilbreite | 72 | Verteiler |
| | | 74 | Spritzleitung |
| 50 | Spritzeinrichtung | 76 | Hauptleitung |
| 52 | Vorratstank | 78 | Zwischenbehälter |
| 52a | Erster Vorratstank | 80 | Drossel |
| 52b | Zweiter Vorratstank | 82 | Sperrventil, Rückschlagventil |
| 52c | Dritter Vorratstank | | |
| 54 | Zusatztank | 100 | Rechnereinheit |
| | | 102 | Signal- und/oder Befehlsübertragungselemente |
| 56 | Leitungssystem | | |
| 58 | Pumpe | | |
| 58a | Hauptpumpe | | |

## Patentansprüche

1. Spritzeinrichtung (50) zum Ausbringen von Spritzflüssigkeit, insbesondere auf landwirtschaftlichen Nutzflächen, umfassend:
- wenigstens einen Vorratstank (52; 52a; 52b; 52c), für wenigstens eine Spritzflüssigkeit,
- wenigstens ein Aufnahmeelement zur Aufnahme und Weiterleitung der Spritzflüssigkeit,
- ein Druckerzeugungsglied, zur Erzeugung eines Förderdruck zur Förderung der Spritzflüssigkeit vom Vorratstank (52; 52a; 52b; 52c) zum Aufnahmeelement,
- eine oder mehrere zwischen dem Vorratstank (52; 52a; 52b; 52c) und dem Aufnahmeelement angeordnete Ventileinheiten (60),
- eine Spritzbalkenanordnung (22) mit Spritzdüsen (24) zum Verteilen der Spritzflüssigkeit, wobei die Öffnungs- und Schließzeiten der einen und/oder der mehreren Ventileinheiten (60) mittels Pulsweitenmodulation in Abhängigkeit einer definierten Flüssigkeitsmenge mittels einer Steuereinrichtung automatisiert steuerbar und/oder regelbar sind, **dadurch gekennzeichnet, dass**
a) das Aufnahmeelement durch einen, vorzugsweise eine Mischkammer ausbildenden, Zusatztank (54) gebildet ist, und dass der einen oder den mehreren Ventileinheiten (60) zumindest eine Durchflussmesseinrichtung (62) nachgeordnet ist und dass die Öffnungs- und Schließzeiten der einen oder der mehreren Ventileinheiten (60) mittels Pulsweitenmodulation in Abhängigkeit einer mittels der Durchflussmesseinrichtung (62) erfassten Flüssigkeitsmenge mittels der Steuereinrichtung automatisiert steuerbar und/oder regelbar sind; und/oder
b) dem wenigstens einen Vorratstank (52; 52a; 52b; 52c) und/oder dem Aufnahmeelement eine Füllstandsmesseinrichtung (64) zugeordnet ist und dass die Öffnungs- und Schließzeiten der einen oder der mehreren Ventileinheiten (60) mittels Pulsweitenmodulation in Abhängigkeit eines mittels der Füllstandsmesseinrichtung (64) erfassten Füllstands mittels der Steuereinrichtung automatisiert steuerbar und/oder regelbar sind.

2. Spritzeinrichtung (50), nach Anspruch 1, **dadurch gekennzeichnet, dass** das Druckerzeugungsglied, ein den Vorratstank (52; 52a; 52b; 52c) mit Druck beaufschlagendes Element ist und/oder eine, die Spritzflüssigkeit vom Vorratstank (52; 52a; 52b; 52c) zum Aufnahmeelement mit einen Förderdruck fördernde Pumpe (58) ist, wobei das Druckerzeugungsglied vorzugsweise ausgebildet und der Spritzeinrichtung derartig zugeordnet ist, dass ein Förderdruck vor der einen Ventileinheit (60) oder vor den mehreren Ventileinheiten (60) größer oder gleich ist als ein Förderdruck nach der einen Ventileinheit (60) oder den mehreren Ventileinheiten (60) und/oder im Aufnahmeelement.

3. Spritzeinrichtung (50), nach Anspruch 1 oder 2 gemäß Variante b), **dadurch gekennzeichnet, dass** das Aufnahmeelement durch zumindest einem von folgendem gebildet ist,
- durch einen, vorzugsweise eine Mischkammer ausbildenden, Zusatztank (54),
- und/oder durch ein Leitungssystem (56), welches eine Mindestlänge von 1 Meter aufweist.

4. Spritzeinrichtung (50), nach einem der vorhergehenden Ansprüche, **dadurch gekennzeichnet, dass** zwischen dem Vorratstank (52) und dem Aufnahmeelement zwei Ventileinheiten (60), drei Ventileinheiten (60) oder mehr Ventileinheiten (60) angeordnet sind, wobei deren Flüssigkeitsmengenbereiche gleich und/oder unterschiedlich sind.

5. Spritzeinrichtung (50), nach einem der vorhergehenden Ansprüche, **dadurch gekennzeichnet, dass** die Öffnungs- und Schließzeiten der einen oder der mehreren Ventileinheiten (60) mittels Pulsweitenmodulation in Abhängigkeit eines Förderdruck mittels der Steuereinrichtung automatisiert steuerbar und/oder regelbar sind.

6. Spritzeinrichtung (50), nach einen der vorhergehenden Ansprüche, **dadurch gekennzeichnet, dass** zwischen dem Vorratstank (52; 52a; 52b; 52c) und dem Aufnahmeelement, zwei Ventileinheiten (60), drei Ventileinheiten (60) oder mehr Ventileinheiten (60) angeordnet sind, wobei diese jeweils mit unterschiedlicher Pulsweitenmodulation steuerbar und/oder regelbar sind.

7. Spritzeinrichtung (50) nach einem der vorhergehenden Ansprüchen, **dadurch gekennzeichnet, dass** die eine Ventileinheit (60), die zwei Ventileinheiten (60), die drei Ventileinheiten (60) oder mehr Ventileinheiten (60) zur Veränderung der Öffnungs- und Schließzeiten mit unterschiedlichen Frequenzen und/oder unterschiedlichen Tastgraden mittels der Steuereinrichtung ansteuerbar und/oder regelbar sind.

8. Spritzeinrichtung (50), nach einem der vorhergehenden Ansprüche, **dadurch gekennzeichnet, dass** zwei oder mehr Ventileinheiten (60), deren Öffnungs- und Schließzeiten mittels Pulsweitenmodulation in Abhängigkeit einer definierten Flüssigkeitsmenge mittels einer Steuereinrichtung automatisiert gesteuert und/oder geregelt werden können, hintereinander angeordnet sind.

9. Spritzeinrichtung (50), nach einem der vorhergehenden Ansprüche, **dadurch gekennzeichnet, dass** diese zwei Vorratstanks (52; 52a; 52b; 52c) oder mehr Vorratstanks (52; 52a; 52b; 52c) für zwei oder mehr, insbesondere unterschiedliche, Spritzflüssigkeiten, umfasst, wobei diesen zumindest ein Druckerzeugungsglied wirkungstechnisch zugeordnet und eine oder mehrere Ventileinheiten (60) deren Öffnungs- und Schließzeiten mittels Pulsweitenmodulation in Abhängigkeit einer definierten Flüssigkeitsmenge mittels einer Steuereinrichtung automatisiert steuerbar und/oder regelbar sind, nachgeordnet sind.

10. Spritzeinrichtung (50), nach Anspruch 9, **dadurch gekennzeichnet, dass** den zwei oder mehr Vorratstanks (52; 52a; 52b; 52c), insbesondere deren Auslässen nachgeordnet, jeweils ein Schaltelement (66) zur Freigabe der Ausgabe der Spritzflüssigkeit in Richtung zu einer oder mehreren Ventileinheiten (60) zugeordnet ist.

11. Spritzeinrichtung (50), nach einem der vorhergehenden Ansprüche, **dadurch gekennzeichnet, dass** die Spritzeinrichtung (50) eine Ventileinheit (60) oder zwei Ventileinheiten (60) oder mehr Ventileinheiten (60) umfasst, wobei jeweils in Abhängigkeit einer erforderlichen Flüssigkeitsmenge eine Dosierung von Spritzflüssigkeit mit einer Ventileinheit (60) oder mit zwei Ventileinheiten (60) oder mehr Ventileinheiten (60) erfolgt.

12. Spritzeinrichtung (50), nach einem der vorhergehenden Ansprüche, **dadurch gekennzeichnet, dass** an der Spritzbalkenanordnung (22) Spritzdüsen (24) angeordnet sind, vorzugsweise derartige welche mittels Pulsweitenmodulation ansteuerbar und/oder regelbar sind.

13. Spritzeinrichtung (50), nach einem der vorhergehenden Ansprüche, **dadurch gekennzeichnet, dass** die Öffnungs- und Schließzeiten der einen und/oder der mehreren Ventileinheiten (60) mittels Pulsweitenmodulation in Abhängigkeit einer definierten Flüssigkeitsmenge mittels einer Steuereinrichtung automatisiert steuerbar und/oder regelbar sind, wobei mittels der Steuereinrichtung intervallweise und kontinuierlich in Abhängigkeit der Öffnungs- und Schließzeiten zwischen einer geöffneten Stellung und einer geschlossenen Stellung der einen und/oder der mehreren Ventileinheiten (60) gewechselt wird.

14. Landwirtschaftliche Feldspritze (10) mit einem, eine Rahmenkonstruktion aufweisendem Chassis (14) und einer Spritzeinrichtung (50) nach einem der Ansprüche 1 - 13.

15. Landwirtschaftliche Feldspritze (10) nach Anspruch 14, **dadurch gekennzeichnet, dass** diese eine selbstfahrende oder eine mittels eines Zugfahrzeug gezogene oder eine an ein Zugfahrzeug angebaute Feldspritze (10) ist.

16. Verfahren zum Betreiben einer Spritzeinrichtung (50), mit wenigstens einem Vorratstank (52; 52a; 52b; 52c), für wenigstens eine Spritzflüssigkeit, wenigstens einem Aufnahmeelement zur Aufnahme und/oder Weiterleitung der Spritzflüssigkeit, einem Druckerzeugungsglied, zur Erzeugung eines Förderdruck zur Förderung der Spritzflüssigkeit vom Vorratstank (52; 52a; 52b; 52c) zum Aufnahmeelement, einer oder mehreren zwischen dem wenigstens einen Vorratstank (52; 52a; 52b; 52c) und dem Aufnahmeelement angeordneten Ventileinheiten (60), einer Spritzbalkenanordnung (22) mit Spritzdüsen (24) zum Verteilen der Spritzflüssigkeit, **gekennzeichnet durch**, ein automatisiertes Steuern und/oder Regeln der Öffnungs- und Schließzeiten der einen und/oder der mehreren Ventileinheiten (60) mittels Pulsweitenmodulation (PWM) in Abhängigkeit einer definierten Flüssigkeitsmenge mittels einer Steuereinrichtung, wobei das Steuern und/oder Regeln der Öffnungs- und/oder Schließzeiten der einen oder der mehreren Ventileinheiten (60) mittels Pulsweitenmodulation mittels der Steuereinrichtung in Abhängigkeit
a) einer, mittels einer der einen oder den mehreren Ventileinheiten (60) nachgeordneten Durchflussmesseinrichtung (62), erfassten Flüssigkeitsmenge erfolgt, wobei das Aufnahmeelement durch einen, vorzugsweise eine Mischkammer ausbildenden, Zusatztank (54) gebildet ist, und/oder
b) eines, mittels einer dem Vorratstank (52; 52a; 52b; 52c) und/oder dem Aufnahmeelement zugeordneten Füllstandsmesseinrichtung (64), erfassten Füllstands erfolgt.

17. Verfahren nach Anspruch 16, **dadurch gekennzeichnet, dass** ein Steuern und/oder Regeln der Öffnungs- und/oder Schließzeiten der einen oder der mehreren Ventileinheiten (60) mittels Pulsweitenmodulation mittels der Steuereinrichtung erfolgt, vorzugsweise in Abhängigkeit eines Förderdrucks.

## Claims

1. Spraying device (50) for the application of spraying liquid, in particular on agricultural land, comprising:
- at least one storage tank (52; 52a; 52b; 52c) for at least one spray liquid,
- at least one receiving element for receiving and transferring the spray liquid
- a pressure generating member for generating a delivery pressure for delivering the spray liquid from the storage tank (52; 52a; 52b; 52c) to the receiving element,
- one or more valve units (60) arranged between the storage tank (52; 52a; 52b; 52c) and the receiving element,
- a spray bar arrangement (22) with spray nozzles (24) for distributing the spray liquid, wherein the opening and closing times of the one and/or the several valve units (60) can be controlled and/or regulated automatically by means of pulse width modulation dependent on a defined quantity of liquid by means of a control means, **characterised in that**
a) the receiving element is formed by an additional tank (54), preferably forming a mixing chamber, and **in that** at least one flow measuring device (62) is arranged downstream of the one or more valve units (60), and **in that** the opening and closing times of the one or more valve units (60) can be automatically controlled and/or regulated by means of the control means by means of pulse width modulation dependent on a quantity of liquid detected by means of the flow measuring device (62), and/or
b) a fill level measuring device (64) is assigned to the at least one storage tank (52; 52a; 52b; 52c) and/or the receiving element, and **in that** the opening and closing times of the one or more valve units (60) can be automatically controlled and/or regulated by means of the control means by means of pulse width modulation dependent on a fill level detected by means of the fill level measuring device (64).

2. Spraying device (50) according to claim 1, **characterised in that** the pressure generating member is an element pressurising the storage tank (52; 52a; 52b; 52c) and/or is a pump (58) conveying the spray liquid from the storage tank (52; 52a; 52b; 52c) to the receiving element with a delivery pressure, wherein the pressure generating member is preferably configured and associated with the spraying device in such a way that a delivery pressure upstream of the one valve unit (60) or upstream of the plurality of valve units (60) is greater than or equal to a delivery pressure downstream of the one valve unit (60) or the plurality of valve units (60) and/or in the receiving element.

3. Spraying device (50), according to claim 1 or 2 according to variant b), **characterised in that** the receiving element is formed by at least one of the following,
- by an additional tank (54), preferably forming a mixing chamber,
- and/or through a pipe system (56) comprising a minimum length of 1 metre.

4. Spraying device (50), according to one of the preceding claims, **characterised in that** two valve units (60), three valve units (60) or more valve units (60) are arranged between the storage tank (52) and the receiving element, their liquid quantity ranges being the same and/or different.

5. Spraying device (50), according to one of the preceding claims, **characterised in that** the opening and closing times of the one or more valve units (60) can be automatically controlled and/or regulated by means of the control means by means of pulse width modulation as a function of a delivery pressure.

6. Spraying device (50), according to one of the preceding claims, **characterised in that** two valve units (60), three valve units (60) or more valve units (60) are arranged between the supply tank (52; 52a; 52b; 52c) and the receiving element, wherein these are each controlled and/or regulated with different pulse width modulation.

7. Spraying device (50) according to one of the preceding claims, **characterised in that** the one valve unit (60), the two valve units (60), the three valve units (60) or more valve units (60) can be controlled and/or regulated by means of the control means in order to change the opening and closing times with different frequencies and/or different duty cycles.

8. Spraying device (50), according to one of the preceding claims, **characterised in that** two or more valve units (60), the opening and closing times of which can be automatically controlled and/or regulated by means of pulse width modulation dependent on a defined quantity of liquid by means of a control means, are arranged one behind the other.

9. Spraying device (50) according to one of the preceding claims, **characterised in that** it comprises two storage tanks (52; 52a; 52b; 52c) or more storage tanks (52; 52a; 52b; 52c) for two or more, in particular different, spray liquids, wherein at least one pressure generating member is operatively associated with these and one or more valve units (60), the opening and closing times of which can automatically controlled and/or regulated by means of a control means by means of pulse width modulation dependent on a defined quantity of liquid, are arranged downstream of these.

10. Spraying device (50) according to claim 9, **characterised in that** the two or more storage tanks (52; 52a; 52b; 52c), in particular downstream of their outlets, are each assigned a switching element (66) for releasing the output of the spray liquid in the direction of one or more valve units (60).

11. Spraying device (50), according to one of the preceding claims, **characterised in that** the spraying device (50) comprises one valve unit (60) or two valve units (60) or more valve units (60), wherein a dosing of spraying liquid with one valve unit (60) or with two valve units (60) or more valve units (60) takes place in each case dependent on a required quantity of liquid.

12. Spraying device (50), according to one of the preceding claims, **characterised in that** spray nozzles (24) are arranged on the spray bar arrangement (22), preferably such nozzles which can be controlled and/or regulated by means of pulse width modulation.

13. Spraying device (50) according to one of the preceding claims, **characterised in that** the opening and closing times of the one and/or the plurality of valve units (60) can be automatically controlled and/or regulated by means of a control means by means of pulse width modulation as a function of a defined quantity of liquid, the control means being used to switch between an open position and a closed position of the one and/or the plurality of valve units (60) at intervals and continuously as a function of the opening and closing times.

14. Agricultural field sprayer (10) with a chassis (14) comprising a frame structure and a spraying device (50) according to one of claims 1 - 13.

15. Agricultural field sprayer (10) according to claim 14, **characterised in that** this is a self-propelled field sprayer (10) or a field sprayer (10) towed by means of a towing vehicle or a field sprayer (10) attached to a towing vehicle.

16. Method for operating a spraying device (50), having at least one storage tank (52; 52a; 52b; 52c) for at least one spraying liquid, at least one receiving element for receiving and/or conveying the spraying liquid, a pressure generating member for generating a delivery pressure for conveying the spraying liquid from the storage tank (52; 52a; 52b; 52c) to the receiving element, one or more valve units (60) arranged between the at least one storage tank (52; 52a; 52b; 52c) arranged between the at least one storage tank (52; 52a; 52b; 52c) and the receiving element, a spray bar arrangement (22) with spray nozzles (24) for distributing the spray liquid, **characterised by**, an automated control and/or regulation of the opening and closing times of the one and/or the several valve units (60) by means of pulse width modulation (PWM) dependent on a defined liquid quantity by means of a control means, wherein the control and/or regulation of the opening and/or closing times of the one or more valve units (60) by means of pulse width modulation by means of the control means is carried out in dependence on a defined quantity of liquid by means of a control device
a) a quantity of liquid detected by means of a flow measuring device (62) arranged downstream of the one or more valve units (60), wherein the receiving element is formed by an additional tank (54), preferably forming a mixing chamber, and/or
b) of a level detected by means of a level measuring device (64) assigned to the storage tank (52; 52a; 52b; 52c) and/or the receiving element.

17. Method according to claim 16, **characterised in that** the opening and/or closing times of the one or more valve units (60) are controlled and/or regulated by means of pulse width modulation by means of the control means, preferably dependent on a delivery pressure.

## Revendications

1. Dispositif de pulvérisation (50) destiné à distribuer du liquide de pulvérisation, en particulier sur des surfaces utiles agricoles, comprenant :
- au moins un réservoir de stockage (52 ; 52a ; 52b ; 52c) pour au moins un liquide de pulvérisation,
- au moins un élément de réception destiné à recevoir et à acheminer le liquide de pulvérisation,
- un organe de production de pression destiné à produire une pression de refoulement pour refouler le liquide de pulvérisation du réservoir de stockage (52 ; 52a ; 52b ; 52c) à l'élément de réception,
- une ou plusieurs unités de soupape (60) disposées entre le réservoir de stockage (52 ; 52a ; 52b ; 52c) et l'élément de réception,
- un ensemble de rampe de pulvérisation (22) avec des buses de pulvérisation (24) destinées à répartir le liquide de pulvérisation, les temps **d'ouverture** et de fermeture des une et/ou plusieurs unités de soupape (60) pouvant être commandés et/ou régulés de manière automatisée au moyen d'un dispositif de commande en fonction d'une quantité de liquide définie par modulation de largeur d'impulsions, **caractérisé en ce que**
a) l'élément de réception est formé par un réservoir supplémentaire (54) réalisant de préférence une chambre de mélange, et qu'au moins un dispositif de mesure de débit (62) est disposé en aval des une ou plusieurs unités de soupape (60), et que les temps d'ouverture et de fermeture des une ou plusieurs unités de soupape (60) peuvent être commandés et/ou régulés de manière automatisée au moyen du dispositif de commande en fonction d'une quantité de liquide détectée au moyen du dispositif de mesure de débit (62) par modulation de largeur d'impulsions ; et/ou
b) un dispositif de mesure de niveau de remplissage (64) est associé à l'au moins un réservoir de stockage (52 ; 52a ; 52b ; 52c) et/ou à l'élément de réception, et que les temps d'ouverture et de fermeture des une ou plusieurs unités de soupape (60) peuvent être commandés et/ou régulés de manière automatisée au moyen du dispositif de commande en fonction d'un niveau de remplissage détecté au moyen du dispositif de mesure de niveau de remplissage (64) par modulation de largeur d'impulsions.

2. Dispositif de pulvérisation (50) selon la revendication 1, **caractérisé en ce que** l'organe de production de pression est un élément soumettant le réservoir de stockage (52 ; 52a ; 52b ; 52c) à l'action d'une pression et/ou est une pompe (58) refoulant le liquide de pulvérisation depuis le réservoir de stockage (52 ; 52a ; 52b ; 52c) vers l'élément de pression avec une pression de refoulement, l'organe de production de pression étant de préférence réalisé et associé au dispositif de pulvérisation de telle manière qu'une pression de refoulement devant une unité de soupape (60) ou devant les plusieurs unités de soupape (60) est supérieure ou égale à une pression de refoulement après l'unité de soupape (60) ou les plusieurs unités de soupape (60) et/ou dans l'élément de réception.

3. Dispositif de pulvérisation (50) selon la revendication 1 ou 2 selon une variante b), **caractérisé en ce que** l'élément de réception est formé par au moins un des éléments suivants
- par un réservoir supplémentaire (54) réalisant de préférence une chambre de mélange,
- et/ou par un système de canalisation (56), qui présente une longueur minimale de 1 mètre.

4. Dispositif de pulvérisation (50) selon l'une des revendications précédentes, **caractérisé en ce que** sont disposées entre le réservoir de stockage (52) et l'élément de réception deux unités de soupape (60), trois unités de soupape (60) ou un nombre supérieur d'unités de soupape (60), leurs plages de quantité de liquide étant identiques et/ou différentes.

5. Dispositif de pulvérisation (50) selon l'une des revendications précédentes, **caractérisé en ce que** les temps d'ouverture et de fermeture des unes ou plusieurs unités de soupape (60) peuvent être commandés et/ou régulés de manière automatisée au moyen du dispositif de commande en fonction d'une pression de refoulement par modulation de largeur d'impulsions.

6. Dispositif de pulvérisation (50) selon l'une des revendications précédentes, **caractérisé en ce que** sont disposées entre le réservoir de stockage (52 ; 52a ; 52b ; 52c) et l'élément de réception deux unités de soupape (60), trois unités de soupape (60) ou un nombre supérieur d'unités de soupape (60), celles-ci pouvant être commandées et/ou régulées chacune avec une modulation de largeur d'impulsions différente.

7. Dispositif de pulvérisation (50) selon l'une des revendications précédentes, **caractérisé en ce que** l'unité de soupape (60), les deux unités de soupape (60), les trois unités de soupape (60) ou un nombre supérieur d'unités de soupape (60) peuvent être commandées et/ou régulées au moyen du dispositif de commande pour modifier les temps d'ouverture et de fermeture à des fréquences différentes et/ou selon des rapports cycliques différents.

8. Dispositif de pulvérisation (50) selon l'une des revendications précédentes, **caractérisé en ce que** deux unités de soupape (60) ou plus, dont les temps d'ouverture et de fermeture peuvent être commandés et/ou régulés de manière automatisée au moyen d'un dispositif de commande en fonction d'une quantité de liquide définie par modulation de largeur d'impulsions, sont disposées l'une derrière l'autre.

9. Dispositif de pulvérisation (50) selon l'une des revendications précédentes, **caractérisé en ce que** lesdits deux réservoirs de stockage (52 ; 52a ; 52b ; 52c) ou un nombre supérieur de réservoirs de stockage (52 ; 52a ; 52b ; 52c) comprennent deux liquides de pulvérisation ou plus, en particulier différents, au moins un organe de production de pression étant associé de manière fonctionnelle à ceux-ci et une ou plusieurs unités de soupapes (60), dont les temps d'ouverture et de fermeture peuvent être commandés et/ou régulés de manière automatisée au moyen d'un dispositif de commande en fonction d'une quantité de liquide définie par modulation de largeur d'impulsions, étant disposées en aval de ceux-ci.

10. Dispositif de pulvérisation (50) selon la revendication 9, **caractérisé en ce que** respectivement un élément de commutation (66) destiné à débloquer la distribution de liquide de pulvérisation en direction d'une ou de plusieurs unités de soupape (60) est associé aux deux réservoirs de stockage (52 ; 52a ; 52b ; 52c) ou plus, en particulier en aval de leurs sorties.

11. Dispositif de pulvérisation (50) selon l'une des revendications précédentes, **caractérisé en ce que** le dispositif de pulvérisation (50) comprend une unité de soupape (60) ou deux unités de soupape (60) ou un nombre supérieur d'unités de soupape (60), un dosage de liquide de pulvérisation étant effectué avec une unité de soupape (60) ou avec deux unités de soupape (60) ou un nombre supérieur d'unités de soupape (60) respectivement en fonction d'une quantité de liquide requise.

12. Dispositif de pulvérisation (50) selon l'une des revendications précédentes, **caractérisé en ce que** sont disposées sur l'ensemble de rampe de pulvérisation (22) des buses de pulvérisation (24), de préférence des buses de pulvérisation telles qui peuvent être pilotées et/ou régulées par modulation de largeur d'impulsions.

13. Dispositif de pulvérisation (50) selon l'une des revendications précédentes, **caractérisé en ce que** les temps d'ouverture et de fermeture des une et/ou plusieurs unités de soupape (60) peuvent être commandés et/ou régulés de manière automatisée au moyen d'un dispositif de commande en fonction d'une quantité de liquide définie par modulation de largeur d'impulsions, le dispositif de commande permettant de passer par intervalle et en continu en fonction des temps d'ouverture et de fermeture entre une position ouverte et une position fermée des une et/ou plusieurs unités de soupape (60).

14. Pulvérisateur agricole (10) avec un châssis (14) comportant une structure de cadre et un dispositif de pulvérisation (50) selon l'une des revendications 1-13.

15. Pulvérisateur agricole (10) selon la revendication 14, **caractérisé en ce que** celui-ci est un pulvérisateur agricole (10) se déplaçant de manière autonome ou tracté au moyen d'un véhicule de traction ou installé sur un véhicule de traction.

16. Procédé destiné à faire fonctionner un dispositif de pulvérisation (50), avec au moins un réservoir de stockage (52 ; 52a ; 52b ; 52c) pour au moins un liquide de pulvérisation, au moins un élément de réception destiné à recevoir et/ou à acheminer le liquide de pulvérisation, un organe de production de pression destiné à produire une pression de refoulement pour refouler le liquide de pulvérisation du réservoir de stockage (52 ; 52a ; 52b ; 52c) à l'élément de réception, une ou plusieurs unités de soupape (60) disposées entre l'au moins un réservoir de stockage (52 ; 52a ; 52b ; 52c) et l'élément de réception, un ensemble de rampe de pulvérisation (22) avec des buses de pulvérisation (24) destinées à répartir le liquide de pulvérisation, **caractérisé par** une commande et/ou une régulation automatisées des temps d'ouverture et de fermeture des une ou plusieurs unités de soupape (60) par modulation de largeur d'impulsions (PWM) en fonction d'une quantité de liquide définie au moyen d'un dispositif de commande, la commande et/ou la régulation des temps d'ouverture et/ou de fermeture des une et/ou plusieurs unités de soupape (60) étant effectuées au moyen du dispositif de commande par modulation de largeur d'impulsions en fonction
a) d'une quantité de liquide détectée au moyen d'un dispositif de mesure de débit (62) disposé en aval des une ou plusieurs unités de soupape (60), l'élément de réception étant formé par un réservoir supplémentaire (54) réalisant de préférence une chambre de mélange, et/ou
b) d'un niveau de remplissage détecté au moyen d'un dispositif de mesure de niveau de remplissage (64) associé au réservoir de stockage (52 ; 52a ; 52b ; 52c) et/ou à l'élément de réception.

17. Procédé selon la revendication 16, **caractérisé en ce qu'**une commande et/ou une régulation des temps d'ouverture et/ou de fermeture des une ou plusieurs unités de soupape (60) sont effectuées au moyen du dispositif de commande par modulation de largeur d'impulsions, de préférence en fonction d'une pression de refoulement.
